# EUROPÄISCHE PATENTANMELDUNG

(11) **EP 3 757 042 A1**
(43) Veröffentlichungstag der Anmeldung: **30.12.2020**
(21) Anmeldenummer: 20177747.1
(22) Anmeldetag: 02.06.2020
(51) Int. Cl.: B65G 43/10, B65G 47/08, B65G 47/26, B65G 43/08

(54) **VORRICHTUNG UND VERFAHREN ZUM UMGANG MIT IN MINDESTENS EINER REIHE NACHEINANDER BEWEGTEN STÜCKGÜTERN**

(30) Priorität: 27.06.2019 DE 102019117349
(71) Anmelder: Krones Aktiengesellschaft, 93073 Neutraubling (DE)
(72) Erfinder: EHBERGER, Marco, 93073 Neutraubling (DE); KIRZINGER, Johannes, 93073 Neutraubling (DE); KOLLMUSS, Manuel, 93073 Neutraubling (DE)
(74) Vertreter: Benninger, Johannes

(57) **Zusammenfassung**

Die Erfindung bezieht sich auf eine Vorrichtung (10) und ein Verfahren zum Umgang mit in mindestens einer Reihe (1) nacheinander bewegten Stückgütern (2), wobei in einem SOLL-Zustand keine Abstände zwischen nacheinander angeordneten Stückgütern ausgebildet sind. Die Vorrichtung (10) umfasst mindestens einen Manipulator (5) für Stückgüter (2), wenigstens eine Transporteinrichtung (3), über welche die bewegten Stückgüter (2) in mindestens einer Reihe (1) zu einem Erfassungsbereich (4) des mindestens einen Manipulators (5) transportierbar sind, sowie wenigstens eine dem Erfassungsbereich (4) und/oder einem Bewegungsraum des wenigstens einen Manipulators (5) zugeordnete Horizontalfördereinrichtung (6), über welche die bewegten Stückgüter (2) in dem Erfassungsbereich (4) des mindestens einen Manipulators (5) transportierbar sind.

Weiterhin ist wenigstens ein der Transporteinrichtung (3) zugeordnetes erstes Detektionsmittel (30) zur Erfassung eines in Abweichung von dem SOLL-Zustand auftretenden Abstands (A) oder mehrere in Abweichung von dem SOLL-Zustand auftretende Abstände (A) zwischen innerhalb der Reihe (1) nacheinander transportierten Stückgütern (2) vorgesehen, wobei wenigstens eine Förderkomponente der Vorrichtung (10) bei Erfassung des Abstands (A) oder der Abstände (A) zwischen nacheinander innerhalb der Reihe (1) transportierten Stückgütern (2) steuerbar ist, insbesondere die wenigstens eine Transporteinrichtung (3) und/oder die wenigstens eine Horizontalfördereinrichtung (6) und/oder der wenigstens eine Manipulator (5).

## Beschreibung

Die vorliegende Erfindung betrifft eine Vorrichtung und Verfahren zum Umgang mit nacheinander bewegten Stückgütern mit den Merkmalen der Ansprüche 1 und 10.

Bei bekannten Verfahren zur Verpackung und/oder Palettierung von Stückgütern wie Paketen, Gebinden o. dgl. werden diese zunächst auf in Linien fördernden Transporteinrichtungen befördert und in geeigneter Weise verschoben, ausgerichtet und/oder zusammengestellt, um gewünschte Lagenbilder zu erzeugen, die anschließend mehrfach übereinander gestapelt werden können, beispielsweise auf hierfür vorbereitete Paletten. Diese Behandlungsschritte können insbesondere bei Anlagen zur Behandlung von Behältern für Getränke sinnvoll eingesetzt werden. Bei den fraglichen Stückgütern kann es sich beispielsweise um Pakete, um Kästen, Kartons, Gebinde oder sonstige Cluster handeln.

Damit die erwähnten Paletten transportsicher sind, müssen die zusammengestellten Lagenbilder, die auch als zusammengestellte Takte bezeichnet werden, bestimmte Anforderungen erfüllen. Herkömmlicherweise sind zur Ausbildung solcher Takte vorbereitende Maßnahmen notwendig, die etwa darin bestehen, die zunächst regelmäßig oder schrittweise auf einem sog. Zuteilungsband beförderten Stückgüter auf einem zwischengeschalteten Transportband zu gruppieren oder zu sammeln, um sie von dort gesammelt und/oder gruppiert an ein Lagenbildungsband oder einen Lagenbildungstisch zu übergeben.

Aus dem Stand der Technik ist es bekannt, Stückgüter vereinzelt von einem Zuteilband auf ein Transportband zu übergeben, womit gemeint ist, dass auf dem Zuteilband jeweils einzelne Stückgüter an das Transportband übergeben werden. Diese Übergabe kann dadurch erfolgen, dass jedes einzelne Stückgut durch einen Geschwindigkeitsunterschied zwischen Zuteilband und Transportband einzeln auf das Transportband übergeben wird, wobei eine Steuerung mithilfe optischer Sensoren wie etwa Lichtschranken vorhanden sein kann. Ebenso denkbar ist es, die Stückgüter vereinzelt von dem Transportband durch schrittweises Fördern des Lagenbildungsbandes zu übergeben. Um auf solche Weise jeweils einzelne Stückgüter vom Transportband auf das Lagenbildungsband zu übergeben, kann das Lagenbildungsband in synchronisierten Schritten mit dem Transportband genau um eine Länge eines Stückgutes in Transportrichtung verfahren werden. Auf dem Transportband können diese Takte oder Gruppierungen oder Teile der gruppierten Stückgüter je nach gewünschter Lagenbildung auch gedreht werden, um dann an das Lagenbildungsband übergeben zu werden.

Für die Ausgestaltung von Gruppiertischen, die dem Zusammenführen von Stückgütern wie z.B. Kartons, Schrumpfpacks, Trays oder Kunststoffkisten dienen, kennt der Stand der Technik unterschiedliche Ausführungsvarianten. So können etwa Stückgüter zusammengeführt werden, indem sie in eine zweidimensionale Formation (Blockbildung, z.B. Palettenschicht) gebracht werden. Hierzu kann beispielsweise eine Rollenbahn aus einer Gasse oder aus mehreren Gassen linear versorgt werden. Die Stückgüter können je nach Bedarf vor oder auf dem Rollenförderer gedreht und auf dem Rollenförderer mechanisch durch Stoppstellen in der jeweils erforderlichen Position angeordnet werden. Die solchermaßen positionierten Stückgüter können anschließend orthogonal zur Transportrichtung vom Rollenförderer abgeschoben werden. Der Zulauf, die Anordnung und das Abschieben der Stückgüter können hierbei als ein Zyklus betrachtet werden. Zur Zusammenstellung einer Schicht wird mindestens ein solcher Zyklus benötigt; normalerweise jedoch sind mehrere solcher Zyklen notwendig, um eine Schicht zu bilden. Die teilweise diskontinuierliche Förderung mit ihren relativ abrupten Geschwindigkeits- oder Richtungsänderungen führt zu entsprechend hohen mechanischen Belastungen, die auf die Stückgüter wirken, was einer produktschonenden Verarbeitung der Stückgüter abträglich sein kann.

Das Dokument EP 1 465 101 A2 offenbart eine Vorrichtung zur Reihenbildung von Packgütern für Gebindepalletierer. Der Gebindepalletierer umfasst mindestens eine Lagenbildungsstation und mindestens eine Palletierstation. Die Reihenbildungsvorrichtung umfasst mindestens eine Positionierstation, auf der die Packgüter während des Transports in mindestens einer Reihe mit gewünschten Abständen angeordnet werden. Die Positionierstation ist an einen der Lagenbildungsstation zugeordneten Bereitstellungsförderer angeschlossen. Stromaufwärts der Positionierstation ist mindestens ein Stauförderer angeordnet, wobei die Positionierstation mehrere in Transportrichtung hintereinander angeordnete Förderabschnitte mit steuer- und regelbaren Antrieben besitzt. Mit den steuer- und regelbaren Antrieben ist es möglich, eine gewünschte Abstandsbildung der Packgüter zu erzielen. Die Reihenbildungsvorrichtung besitzt mindestens eine Überwachungseinrichtung zur Ermittlung und Überwachung der Abstandsbildung der Packgüter. Der Aufbau dieser bekannten Reihenbildungsvorrichtung ist relativ aufwendig und kompliziert, zumal er eine Vielzahl von Bändern erfordert, die für eine Abstandsbildung und/oder Drehung der Packgüter benötigt werden.

Aus der US 5 123 231 A ist eine Vorrichtung zur Zusammenstellung von Artikeln zu Gruppen und zu deren anschließenden Verpackung bekannt. Auf einem Zuführband werden die Artikel jeweils unter einem vordefinierten Abstand einem Sammelband zugeführt, auf dem die Gruppen aus einer immer gleichen Anzahl von Artikeln zusammengestellt werden. Die Gruppen werden mit einem nachfolgenden Band einer Verpackungseinrichtung zugeführt.

Die EP 1 927 559 A1 offenbart einen Gruppiertisch zum Zusammenführen von Gebinden, insbesondere von Schrumpfpacks, zur Schichtenbildung, umfassend einen kontinuierlich antreibbaren Förderer, einen dem Förderer nachgeordneten und taktweise antreibbaren Schrittförderer, einen seitlich neben dem Schrittförderer angeordneten Schichtenbildungsplatz und eine dem Schrittförderer zugeordnete rechtwinklig zur Förderrichtung wirksame Abschiebeeinrichtung zum gruppenweisen Überführen der Gebinde auf den Schichtenbildungsplatz.

Die US 2005/0246056 A1 offenbart ein System zum Anordnen von Packstücken in einer Lage, die im weiteren Verlauf der Handhabung auf einer Palette abgelegt oder gestapelt werden. Dabei sind drei Förderbänder linear angeordnet. Über ein erstes Förderband werden die Packstücke der Vorrichtung zur Verfügung gestellt. Die Packstücke sind auf dem ersten Förderband linear angeordnet. Mit einem zweiten Förderband werden die Packstücke vereinzelt. Anschließend gelangen die Packstücke zu einem dritten Förderband, bei dem die Anordnung der Packstücke durchgeführt wird. Alle drei Förderbänder laufen mit unterschiedlichen, doch jeweils konstanten Geschwindigkeiten. Nachdem eine Lage fertig zusammengestellt ist, wird die Lage auf die Palette übergeführt.

Geeignete Manipulatoren oder den Lagenbildungsbändern zugeordnete Roboter können beispielsweise als Mehrachsroboter ausgebildet sein, wie sie beispielsweise aus der DE 10 2009 026 220 A1 im Zusammenhang mit der Gruppierung von Artikeln oder von Getränkebehältern bekannt sind. Eine häufig eingesetzte Variante von derartigen Manipulatoren sind sog. Portalroboter, die oftmals in modularer Bauweise in Verpackungsstraßen, in Gruppiereinheiten oder in Palettierstationen eingesetzt werden. Als Transportmittel oder Förderelement wird häufig ein horizontal in Längsrichtung der Förderebene verlaufendes Förderband oder ein anderes endlos umlaufendes Medium verwendet, auf dem die Gegenstände und/oder die Verpackungen in vorbestimmten Positionen oder auch in zufällig eingenommenen Positionen angeordnet sind. Ein derartiges Modul ist beispielsweise aus der DE 10 2009 043 970 A1 bekannt. Die in solchen Modulen typischerweise eingesetzten Portalroboter können beispielsweise mit Greifvorrichtungen zum seitlichen Erfassen der zu handhabenden und zu manipulierenden Stückgüter ausgestattet sein, wie sie etwa aus der DE 10 2010 020 847 A1 bekannt sind.

Aus der WO 2014/110349 A1 sind optische Überwachungseinrichtungen bekannt, mit deren Hilfe ein Handhabungsroboter zur Erfassung und Positionierung von Stückgütern im Zusammenhang mit deren Transport, Positionierung und/oder Stapelung gesteuert werden. Allerdings ist hierbei eine permanente Steuerung auf Grundlage der optischen Erfassung der Stückgüter vorgesehen, was einen hohen Rechen- und Steuerungsaufwand bedeutet.

Die DE 602 00 953 T2 offenbart ein Verfahren und System zur automatischen und kontinuierlichen Herstellung von Schichten von Verkaufseinheiten vor einer Palettierung. Die Schichtenbildungen erfolgen mittels Roboter, deren exakte Positionierung mittels Inkrementalgebern vorgegeben wird, die den Fördereinrichtungen für die Verkaufseinheiten zugeordnet sind. Bei solchen Koppelungen mittels Inkrementalgebern besteht jedoch das Risiko, dass bei einer ungenauen Positionierung von Stückgütern Abweichungen in der Zuordnung ergeben. Außerdem können sich Fehlpositionierungen von Stückgütern aufsummieren, so dass weitere Maßnahmen zur exakten Bewegungssteuerung der Roboter notwendig werden können.

Mit allen diesen bekannten Handhabungssystemen werden in erster Linie präzise Positionierungen von Stückgütern, Paketen, Gebinden und/oder Artikeln für eine möglichst störungsfreie und zuverlässige Lagenbildungs-, Palettierungs- und/oder Verpackungsvorbereitung angestrebt. Ein Nebenziel, das jedoch zunehmend wichtiger wird, besteht darin, hierbei die Taktzeiten zu reduzieren, ohne hinsichtlich eines bereits erreichten Grades an Präzision und/oder hinsichtlich der bereits erreichten Zuverlässigkeit Einbußen in Kauf nehmen zu müssen.

Angesichts des bekannten Standes der Technik kann es als Ziel der vorliegenden Erfindung angesehen werden, eine exakte und positionsgenaue Verarbeitung und Handhabung von Stückgütern zu ermöglichen, die in mindestens einer Reihe befördert oder transportiert werden. Die Position der angelieferten Stückgüter sollte im Erfassungsbereich eines Manipulators immer bekannt oder zumindest innerhalb sehr geringer Grenzen bekannt sein, um ein gezieltes Erfassen der Stückgüter durch den Manipulator zu ermöglichen, insbesondere ohne in die Bewegungssteuerung des Manipulators eingreifen zu müssen und ohne, dass hierzu ein großer Rechen- und/oder Steuerungsaufwand erforderlich sein soll.

Zudem soll das Verfahren mit hoher Geschwindigkeit ablaufen können, ohne dass damit Nachteile hinsichtlich der Positionierungspräzision und/oder der Zuverlässigkeit der Manipulation der Stückgüter in Kauf zu nehmen sind. Die entsprechende Vorrichtung soll schnell und mit geringem Rechen- und/oder Steuerungsaufwand für die Bewegungssteuerung eines Manipulators betreibbar sein, und dies bei hoher Zuverlässigkeit und gleichbleibend hoher Stellpräzision.

Diese Ziele der Erfindung werden mit den Gegenständen der unabhängigen Ansprüche, d.h. mit einer Vorrichtung zum Umgang mit in mindestens einer Reihe nacheinander bewegten Stückgütern und mit einem Verfahren zum Umgang mit in mindestens einer Reihe nacheinander bewegten Stückgütern erreicht, welche die Merkmale der unabhängigen Patentansprüche 1 und 10 umfassen. Merkmale vorteilhafter Weiterbildungen der Erfindung ergeben sich aus den jeweiligen abhängigen Ansprüchen.

Die Erfindung bezieht sich auf eine Vorrichtung und ein Verfahren zum Umgang mit in mindestens einer Reihe nacheinander bewegten Stückgütern, wobei die Stückgüter innerhalb der Reihe in einem SOLL-Zustand transportiert werden, bei dem keine Abstände zwischen direkt aufeinanderfolgenden Stückgütern ausgebildet sind. D.h. insbesondere, dass die Stückgüter Stoß-an-Stoß als sogenannte geschlossene Formation transportiert werden.

Wenn im Zusammenhang der vorliegenden Beschreibung an einigen Stellen lediglich noch von einem Verfahren, einer Verfahrensvariante, dem erfindungsgemäßen Verfahren o. dgl. die Rede ist, so ist damit generell das genannte Verfahren zum Umgang mit bewegten Stückgütern gemeint. Vorzugsweise betrifft dies ein Verfahren zum Umgang mit in mindestens einer Reihe hintereinander bewegten Stückgütern. Wenn zudem im Zusammenhang der vorliegenden Beschreibung an einigen Stellen nur noch von einer Vorrichtung, einer Handhabungsvorrichtung, einer Vorrichtungsvariante der erfindungsgemäßen Vorrichtung o. dgl. die Rede ist, so ist damit generell die genannte Vorrichtung zum Umgang mit bewegten Stückgütern gemeint, insbesondere zum Umgang mit in mindestens einer Reihe lückenlos hintereinander bewegten Stückgütern.

Wenn in der folgenden Beschreibung, in den Beschreibungspassagen zu den Ausführungsbeispielen, in den Ansprüchen und/oder im Zusammenhang mit der gesamten Beschreibungs- und/oder Zeichnungsoffenbarung von einem Umgang mit Stückgütern die Rede ist, so umfasst dies die Handhabung, die Erfassung, die Positionierung, die Bewegung im Raum, die Drehung, Ausrichtung etc., insbesondere im Zusammenhang mit einem Manipulator und/oder beweglichen Teilen des Manipulators, die in einem Erfassungsraum oder Erfassungsbereich angeordnet sind und sich dort innerhalb von definierbaren Grenzen bewegen können.

Allerdings umfasst der Begriff des Umgangs gleichermaßen Positionierungs-, Förder- und/oder alle Arten von Handhabungsschritten, die im Zusammenhang mit Fördereinrichtungen, Horizontalfördereinrichtungen, Transportbändern etc. stattfinden können, die Teil der erfindungsgemäßen Vorrichtung sind und/oder mit dieser in Wirkverbindung und/oder in einer Transportverbindung stehen, seien dies in Transport- und/oder Förderrichtung nachgeordnete, vorgeordnete oder integrierte Teile der erfindungsgemäßen Vorrichtung.

Wenn von einer unveränderten oder neuen Ausrichtung der Stückgüter nach ihrer Erfassung und/oder Handhabung die Rede ist, so ist damit im Zusammenhang mit der vorliegend beschriebenen Vorrichtung und mit dem vorliegenden beschriebenen Verfahren insbesondere die winkelige Ausrichtung der zuvor erfassten und vom Manipulator bewegten und/oder verschobenen und/oder gedrehten Stückgüter die Rede. Mit Erfassen ist im vorliegenden Zusammenhang meist das körperliche, formschlüssige und/oder kraftschlüssige und/oder klemmende Greifen eines Stückgutes oder gleichzeitig mehrerer Stückgüter sowie deren oder dessen Handhabung bis zur Erreichung einer Zielposition und/oder Zielausrichtung gemeint.

Bei den bewegten Stückgütern kann es sich gemäß einer bevorzugten Ausführungsform um in mindestens einer Reihe hintereinander bewegte Artikel, Packstücke, Behälterzusammenstellungen, Gebinde, Kartons o.ä. handeln. Beispielsweise kann vorgesehen sein, dass eine Mehrzahl von gleichen oder unterschiedlichen Artikeln durch eine Kartonumverpackung, durch eine Umreifung oder mehrere Umreifungen, durch eine Folienverpackung, durch eine Mehrzahl von Klebeverbindungen o. dgl. zu einem Gebinde oder Mischgebinde zusammengefasst sind. Weiterhin kann eine Mehrzahl von Getränkebehältern, die beispielsweise durch eine Schrumpfverpackung, durch ein Umreifungsband oder mehrere Umreifungsbänder zusammengehalten werden, jeweils ein Stückgut im Sinne der vorliegenden Definition bilden. Die in mindestens einer Reihe hintereinander bewegten Stückgüter können dabei je nach Anforderung von nachfolgenden Handhabungsvorrichtungen gleich oder unterschiedlich ausgebildet sein.

Mit dem Begriff der geschlossenen Formation ist eine lückenlose Aufeinanderfolge von Stückgütern gemeint, die hintereinander transportiert werden. Die geschlossene Formation im Sinne der vorliegenden Erfindung kann eine endliche Länge haben und eine begrenzte Zahl von Stückgütern umfassen, wonach eine Lücke und einer solchen Lücke ggf. eine weitere solche Formation folgen kann, die nachfolgend transportiert wird. Eine solche Abfolge kann sich wiederholen, ggf. auch mehrfach, vielfach oder in unbestimmter Zahl. Die geschlossene Formation kann aber auch gemäß einer besonders bevorzugten Ausführungsform über die wenigstens eine Transporteinrichtung als Endlos- Formation transportiert und dem Erfassungsbereich des Manipulators zugeführt werden. Eine solches Endlos- Formation besteht aus einer beliebigen Anzahl von in einer Reihe lückenlos hintereinander angeordneten Stückgütern und weist insbesondere keine Unterbrechung zwischen den Stückgütern auf.

Die Vorrichtung umfasst wenigstens eine Transporteinrichtung zur Zuführung der Stückgüter zu einem Erfassungsbereich mindestens eines Manipulators. Bei der Transporteinrichtung handelt es sich beispielsweise um einen Horizontalförderer, insbesondere ein Horizontalförderband. Der Manipulator erfasst in seinem Erfassungsbereich mindestens eines der in geschlossener Formation zugeführten Stückgüter oder eine Gruppe aus mindestens zwei innerhalb der geschlossenen Formation direkt aufeinanderfolgende Stückgüter und handhabt oder manipuliert dieses Stückgut oder diese Gruppe entsprechend einem vorgegebenen Programm. Insbesondere wird durch den Manipulator wenigstens ein transportiertes Stückgut aus der geschlossenen Formation klemmend und/oder kraftschlüssig und/oder formschlüssig erfasst, von der geschlossenen Formation räumlich abgetrennt und in eine definierte relative Zielposition und/oder Zielausrichtung gegenüber nachfolgenden Stückgütern der geschlossenen Formation gebracht.

Wenn im Zusammenhang der vorliegenden Erfindung von einer klemmenden Erfassung von Stückgütern die Rede ist, so umfasst dies ebenso eine kraftschlüssige und/oder reibschlüssige Erfassung, ein kraftschlüssiges und/oder reibschlüssiges Greifen oder Aufnehmen von Stückgütern. Alle diese Varianten des Aufnehmens, Erfassens und/oder Greifens von Stückgütern können gleichermaßen mit einem formschlüssigen Erfassen, Greifen oder Aufnehmen der Stückgüter kombiniert sein. Wenn im Zusammenhang der vorliegenden Erfindung von einer Zielposition und/oder Zielausrichtung die Rede ist, so kann dies insbesondere bedeuten, dass die Stückgüter erfasst, verschoben und/oder gedreht werden können, wobei die Stückgüter wahlweise auch nur verschoben (ohne Drehung) oder nur gedreht (ohne Verschiebebewegung) werden können.

Dem Erfassungsbereich und/oder einem Bewegungsraum des wenigstens einen Manipulators ist eine Horizontalfördereinrichtung zugeordnet. Diese ist insbesondere fluchtend zur zuführenden Transporteinrichtung angeordnet. Die Stückgüter werden auf der Horizontalfördereinrichtung in Transportrichtung vorzugsweise mit derselben Geschwindigkeit wie auf der Transporteinrichtung bewegt. Insbesondere bilden der Manipulator und die Horizontalfördereinrichtung ein sogenanntes Gruppiermodul der Vorrichtung.

Alternativ können der Manipulator und die Horizontalfördereinrichtung ein Verteilsystem bilden, bei dem die Stückgüter für die nachfolgende Bearbeitung durch gleiche oder unterschiedliche Handhabungsvorrichtungen in mehrere Reihen aufgeteilt und der weiteren Verarbeitung zugeführt werden. Der Manipulator und die Horizontalfördereinrichtung können auch ein Drehmodul bilden, innerhalb dessen der Manipulator einzelne Stückgüter oder Gruppen umfassend mehrere Stoß-an-Stoß transportierte Stückgüter von der mindestens einen zuführenden oder der mindestens einen zugeführten Reihe erfasst und vermittels einer Drehung in eine für die nachfolgende Handhabung angepasste, gewünschte Ausrichtung verbringt. Weiterhin können der Manipulator und die Horizontalfördereinrichtung auch ein Dreh- und/oder Verteilmodul ausbilden. Auch wenn nachfolgend von einem Gruppiermodul gesprochen wird, sollen die anderen Verarbeitungsmöglichkeiten ebenfalls als Ausführungsvariante umfasst sein.

Auf der Horizontalfördereinrichtung werden vom Manipulator nicht erfasste Stückgüter sowie vom Manipulator in die gewünschte Zielposition und/oder Zielausrichtung verbrachte Stückgüter mit einer Geschwindigkeit in Transportrichtung transportiert, insbesondere entspricht die Transportrichtung der Stückgüter durch die Horizontalfördereinrichtung der Transportrichtung der die Stückgüter in lückenloser Formation zuführenden Transporteinrichtung. Gemäß einer Ausführungsform können die Transporteinrichtung und die Horizontalfördereinrichtung durch fluchten angeordnete Förderbänder ausgebildet sein. Alternativ können die Begriffe Transporteinrichtung und Horizontalfördereinrichtung auch für aufeinander folgende Transportabschnitte eines durchgängigen Förderbandes verwendet werden.

Der Erfassungsbereich im Sinne der vorliegenden Erfindung definiert insbesondere einen Bewegungsraum des wenigstens einen Manipulators der erfindungsgemäßen Vorrichtung. Der mindestens eine Manipulator ist typischerweise und/oder vorzugsweise zum klemmenden und/oder formschlüssigen und/oder kraftschlüssigen Erfassen und/oder Entgegennehmen jeweils mindestens eines Stückgutes aus der mittels der wenigstens einen Transporteinrichtung in den Erfassungsbereich des Manipulators einlaufenden Reihe von hintereinander transportierten Stückgütern ausgebildet. Weiterhin ist der Manipulator zum Abtrennen und selektiven Überführen des mindestens einen erfassten Stückgutes in eine Zielposition und/oder Zielausrichtung ausgebildet.

Vorzugsweise ist vorgesehen, dass zu dem Zeitpunkt des Erfassens mindestens eines Stückgutes zwischen diesem und den direkt nachfolgenden Stückgütern der lückenlosen Formation kein Staudruck oder allenfalls ein sehr geringer Staudruck besteht oder herrscht. Sollte sich beim Heranführen der Stückgüter dennoch ein Staudruck aufgebaut haben, so ist dieser vorzugsweise vor dem Erfassen mindestens eines Stückgutes durch geeignete Mittel abzubauen; beispielsweise kann dies durch Auswahl einer geeigneten Oberfläche der Transporteinrichtung für die in Reihe hintereinander bewegten Stückgütern erreicht werden. Insbesondere kann vorgesehen sein, dass die Oberfläche der mindestens einen zuführenden Transporteinrichtung gummiert ist, um ein Verrutschen der Stückgüter auf der Transporteinrichtung zu verhindern oder um den Staudruck der ständig nachgeförderten Formation oder Stückgutreihe abzubauen oder zumindest signifikant zu reduzieren.

Gemäß einer Ausführungsform können dem mindestens einen Manipulator wenigstens zwei gegenüberliegend, insbesondere paarweise einander gegenüberliegend angeordnete, gegeneinander zustellbare Klemm- und/oder Greifmittel zugeordnet sein, welche zum klemmenden und/oder kraft- und/oder formschlüssigen Erfassen sowie zum Abtrennen und selektiven Überführen der jeweiligen Stückgüter in die Zielpositionen und/oder Zielausrichtungen miteinander, insbesondere jeweils paarweise miteinander, zusammenwirken. Die Klemm- und/oder Greifmittel des Manipulators sind während des Erfassens der Stückgüter vorzugsweise parallel zur Transportrichtung der zulaufenden Stückgüter ausgerichtet.

Aus den insbesondere in Reihe als geschlossene Formation zugeführten Stückgütern, wird im Erfassungsbereich des wenigstens einen Manipulators wenigstens ein transportiertes Stückgut klemmend und/oder kraftschlüssig und/oder formschlüssig vom Manipulator erfasst, von den nachfolgenden Stückgütern räumlich abgetrennt und in eine definierte relative Zielposition und/oder Zielausrichtung gegenüber den nachfolgenden Stückgütern gebracht. Dies erfolgt insbesondere in einem kontinuierlichen Prozess, bei dem die Zufuhr nachfolgender Stückgüter nicht unterbrochen wird, sondern kontinuierlich fortgeführt wird. Die Stückgüter werden nach Verbringen in ihre jeweilige definierte Zielposition mittels der mindestens zwei sich gegenüberliegenden Klemm- und/oder Greifmittel freigegeben.

Die gegeneinander zustellbaren Klemm- und/oder Greifmittel erlauben ein schnelles Erfassen, Verschieben, Positionieren und Freigeben der Stückgüter in der gewünschten Geschwindigkeit mit der gewünschten Stellpräzision. Auch andere Manipulatoren können vorteilhaft eingesetzt werden, beispielsweise solche, die als Mehrachsroboter, als Teile von solchen Mehrachsrobotern, als Parallelkinematik-Roboter, als Deltakinematik-Roboter oder sog. Tripode oder einen Teil eines Deltakinematik-Roboters oder Parallelkinematik-Roboter bildenden Manipulators ausgebildet sind.

Bei der beschriebenen Vorrichtung ist vorgesehen, dass der Transporteinrichtung wenigstens ein erstes Detektionsmittel zum Erfassen eines in Abweichung von dem SOLL-Zustand auftretenden Abstands oder mehrerer in Abweichung von dem SOLL-Zustand auftretende Abstände zwischen den in geschlossener Formation transportierten Stückgütern zugeordnet ist. Ein solcher Abstand ist ungewünscht, da er die Zuführung der Stückgüter als lückenlose Formation unterbricht.

Das Vorhandensein eines Abstands bedeutet, dass direkt aufeinanderfolgende Stückgüter nicht Stoß-an-Stoß und somit nicht lückenlos aufeinanderfolgend innerhalb der Reihe angeordnet sind. Wird ein Abstand zwischen Stückgütern ermittelt, dann stellt dieser festgestellte Abstand eine Abweichung vom SOLL-Zustand und somit einen Fehler innerhalb der geschlossenen Formation dar.

Eine solche Fehlpositionierung oder Fehlausbildung der geschlossenen Formation ist insbesondere problematisch, wenn das dem Abstand vorauseilende Stückgut und das dem Abstand nachlaufende Stückgut und gegebenenfalls weitere daran angrenzende Stückgüter durch den Manipulator gemeinsam erfasst und in einem gemeinsamen Manipulationsschritt in eine Zielposition und/oder Zielausrichtung verbracht werden sollen. Der innerhalb der Reihe ausgebildete ungewünschte Abstand besteht somit auch in der Zielposition und/oder Zielausrichtung zwischen den mindestens zwei gemeinsam erfassten Stückgütern. Der Fehler wird somit bei der weiteren Handhabung mitgeführt und die nachfolgende Bearbeitung und/oder Handhabung der Stückgüter entsprechend stören.

Wird ein Abstand insbesondere sensorisch erkannt, dann wird wenigstens eine Förderkomponente der Vorrichtung angesteuert und/oder reguliert, um den Abstand zwischen den nacheinander innerhalb der Reihe transportierten Stückgütern zu schließen und somit wieder den SOLL-Zustand, insbesondere eine korrekte geschlossene Formation, herzustellen. Insbesondere wird die wenigstens eine Transporteinrichtung und/oder die wenigstens eine Horizontalfördereinrichtung und/oder der wenigstens eine Manipulator entsprechend angesteuert und/oder reguliert. Die Steuerung und/oder Regelung der unterschiedlichen Förderkomponenten der Vorrichtung zum Schließen eines erkannten Abstands und somit zum Herstellen der lückenlosen Formation an Stückgütern wird vorzugsweise durch eine Steuerungseinrichtung der Vorrichtung detektiert, die dafür sensorisch ermittelte Daten nutzt.

Gemäß einer bevorzugten Ausführungsform der Erfindung ist vorgesehen, dass das Schließen des Abstands zwischen einem dem Abstand vorauseilenden Stückgut und einem dem Abstand nachlaufenden Stückgut erfolgt, bevor zumindest das dem Abstand vorauseilenden Stückgut durch den Manipulator erfasst und von nachfolgenden Stückgütern der Reihe räumlich abgetrennt wird. Vorzugsweise erfolgt das Schließen des Abstands bevor das dem Abstand vorauseilenden Stückgut oder das dem Abstand nachlaufenden Stückgut oder eine Gruppe von mindestens zwei Stückgütern, die Gruppe umfassend das dem Abstand vorauseilenden Stückgut und das dem Abstand nachlaufende Stückgut, durch den Manipulator erfasst und von den nachfolgenden Stückgütern der geschlossenen Formation abgetrennt wird.

Das Schließen des detektierten ungewünschten Abstands und das Herstellen des SOLL-Zustands kann dabei gemäß einer bevorzugten Ausführungsform während der Zuführung der Stückgüter zum Erfassungsbereich erfolgten. D.h. ein Schließen des Abstands kann auf der Transporteinrichtung vorgenommen werden. Beispielsweise wird auf die Stückgüter auf der ersten Transporteinrichtung von hinten eine kurzzeitige Schubkraft aufgebracht, die die dem Abstand nachlaufenden Stückgüter auf der Transporteinrichtung in Transportrichtung verschiebt, bis diese an die dem Abstand vorauseilenden Stückgüter aufschließen.

Die kurzzeitige Schubkraft muss entsprechend zeitlich und kräftemäßig dimensioniert sein, damit nur der Abstand geschlossen wird, nicht aber die gesamte Formation und insbesondere nicht die dem Abstand vorauseilenden Stückgüter in Transportrichtung verschoben werden. Dies kann über eine entsprechende Steuerung und/oder Regelung erfolgen, die die Größe des ermittelten Abstands und die Transportgeschwindigkeit der Transporteinrichtung berücksichtigt, sowie gegebenenfalls weitere Parameter wie beispielsweise die Reibung zwischen den Stückgütern und der ersten Transporteinrichtung usw. Alternativ oder zusätzlich kann ein Kraftsensor aufgrund einer Krafterhöhung den Zeitpunkt ermitteln, in dem das dem Abstand nachlaufende Stückgut an das dem Abstand vorauseilende Stückgut anstößt.

Alternativ können das Schließen des erfassten Abstands und das Herstellen des SOLL-Zustands beim Übergang der Stückgüter von der Zuführung in den Erfassungsbereich des Manipulators, d.h. beim Übergang der Stückgüter in das Gruppiermodul, erfolgen. Dies ist insbesondere durch eine kurzzeitige Erhöhung der Transportgeschwindigkeit der Transporteinrichtung möglich. Auch hierbei ist eine geeignete Steuerung und/oder Überwachung notwendig, damit die bereits im Erfassungsbereich des Manipulators angeordneten Stückgüter nicht in ihrer Positionierung innerhalb des Gruppiermoduls verschoben werden, wodurch eine fehlerhafte Erfassung durch den Manipulator erfolgen könnte.

Vorteilhaft könnten Erfassungs- und Korrekturmechanismen vorgesehen sein, die zusätzlich die genaue Position der durch den Manipulator zu erfassenden Stückgüter innerhalb des Gruppiermoduls ermitteln und gegebenenfalls das Bewegungsprofil des Manipulators an die genaue Position des zu erfassenden Stückgutes oder der zu erfassenden Gruppe an Stückgütern anpassen. Eine solche Positionskorrektur wird nachfolgend noch detaillierter beschrieben.

Alternativ kann das Schließen des erkannten ungewünschten Abstands und das Herstellen des SOLL-Zustands innerhalb der Formation beim Übergang der Stückgüter von der Zuführung in den Erfassungsbereich des Manipulators auch durch eine kurzzeitige Reduzierung der Geschwindigkeit der Horizontalfördereinrichtung vorgenommen werden. Auch eine Kombination von erhöhter Transportgeschwindigkeit der zuführenden Transporteinrichtung und reduzierter Geschwindigkeit der weiterführenden Horizontalfördereinrichtung ist denkbar und für den Fachmann mit seinem Wissen umsetzbar. Für die vorbeschriebenen Ausführungsformen ist es insbesondere notwendig, dass die wenigstens eine Transporteinrichtung und wenigstens eine Horizontalfördereinrichtung unabhängig voneinander ansteuerbar und kontrollierbar sind. Insbesondere weist jede der Förderkomponenten einen eigenen Antrieb auf.

Wird ein besonders großer Abstand innerhalb der geschlossenen Formation detektiert, so kann es sogar sinnvoll sein, die Bewegung der Horizontalfördereinrichtung kurzzeitig komplett anzuhalten, um den SOLL-Zustand wiederherzustellen. Vorzugsweise wird in diesem Zusammenhang auch die Bewegung des Manipulators entsprechend angepasst, indem beispielsweise das vordefinierte Bewegungsprogramm kurzzeitig unterbrochen wird.

Eine alternative Ausführungsform sieht vor, dass das Schließen des Abstands und das Herstellen des SOLL-Zustands erst innerhalb des Erfassungsbereichs des Manipulators, d.h. innerhalb des Gruppiermoduls, erfolgt. Beispielsweise kann das Schließen des Abstands zwischen einem dem Abstand vorauseilenden Stückgut und einem dem Abstand nachlaufenden Stückgut bei dem Erfassen mindestens eines Stückgutes durch den Manipulator erfolgen. Bei dem mindestens einen vom Manipulator erfassten Stückgut handelt es sich dabei um ein Stückgut, dass in Transportrichtung vor dem Stückgut angeordnet ist, das dem Abstand vorauseilt.

Der Manipulator verbleibt beim Erfassen des mindestens einen Stückgutes zumindest kurzzeitig statisch innerhalb des Gruppiermoduls oder bewegt sich gemeinsam mit dem mindestens einen erfassten Stückgut mit einer Geschwindigkeit in Transportrichtung, die geringer ist als die Geschwindigkeit der Horizontalfördereinrichtung. Aufgrund des relativen Geschwindigkeitsunterschiedes zwischen dem Manipulator und der Horizontalfördereinrichtung werden die dem vom Manipulator erfassten Stückgut nachlaufenden Stückgüter abgebremst und insbesondere können somit die dem Abstand nachlaufenden Stückgüter, die insbesondere mit der Geschwindigkeit der Horizontalfördereinrichtung bewegt werden, an die dem Abstand vorauseilenden und durch den Manipulator gebremsten Stückgüter anschließen.

So kann am Manipulator bspw. ein Kraftsensor vorgesehen sein, der die zusätzliche Druckkraft beim Aufschließen der dem Abstand nachlaufenden Stückgüter an die dem Abstand vorauseilenden Stückgüter ermittelt und daraufhin das räumliche Abtrennen des erfassten Stückgutes durch den Manipulator ansteuert.

Gemäß einer alternativen Ausführungsform kann ein erkannter Abstand zwischen zwei Stückgütern innerhalb der geschlossenen Formation sogar erst beim Erfassen des Stückgutes durch den Manipulator erfolgen, welches Stückgut dem Abstand unmittelbar vorauseilt. Eine wichtige Voraussetzung hierfür ist allerdings, dass dieses dem Abstand vorauseilende Stückgut nicht in einem einzigen Manipulationsschritt gemeinsam mit dem Stückgut, das dem Abstand nachläuft, erfasst und gehandhabt werden soll.

Um einen in Abweichung von dem SOLL-Zustand auftretenden ungewünschten Abstand zwischen den Stückgütern innerhalb der geschlossenen Formation zu ermitteln, wird insbesondere eine sensorische Erfassung einer Lücke zwischen zwei Stückgütern vorgenommen. Dabei handelt es sich um eine Lücke nicht definierter Größe. In der geschlossenen Formation werden die Stückgüter Stoß-an-Stoß transportiert. D.h., unmittelbar aufeinanderfolgende Stückgüter berühren einander zumindest bereichsweise. Der Berührbereich oder die Berührfläche ist hierbei von der Form der Stückgüter abhängig. Im Falle von quaderförmigen Stückgütern, die derart auf der Transporteinrichtung angeordnet sind, dass zumindest eine Seitenfläche orthogonal zur Transportrichtung ausgerichtet sind, sollten sich eine in Transportrichtung hintere Seitenfläche eines vorauseilenden Stückgutes und eine in Transportrichtung vordere Seitenfläche des direkt nachfolgenden Stückgutes flächig berühren.

Es sind weiterhin Ausführungsformen denkbar, bei denen Stückgüter sich aufgrund ihrer Form insbesondere quer zur Transportrichtung nur in einem bestimmten Höhenbereich über der durch die Transporteinrichtung gebildeten Auflage- und/oder Transportebene Stoß-an-Stoß berühren. Aus diesem Grund sind eine angepasste Anordnung des ersten Detektionsmittels und insbesondere die Ausrichtung eines Erfassungsbereichs des ersten Detektionsmittels abgestimmt auf den Berührbereich von Bedeutung.

Von einem Abstand wird also im vorliegenden Zusammenhang gesprochen, wenn direkt nacheinander angeordnete Stückgüter nicht zumindest bereichsweise Stoß- an-Stoß angeordnet vorliegen und einander insbesondere nicht zumindest bereichsweise berühren. Der erfasste Abstand kann dabei nur wenige Millimeter betragen. Mit der Vorrichtung können jedoch auch größere Abstände von mehreren Zentimetern oder mehr zwischen direkt aufeinanderfolgenden Stückgütern erkannt und entsprechend korrigiert werden. Die Korrektur erfolgt dabei insbesondere dahingehend, dass der Abstand oder die Lücke zwischen den Stückgütern entfernt wird, wobei das Schließen des Abstands vorzugsweise erfolgt, bevor die Stückgüter, zwischen denen der Abstand ausgebildet ist, von dem Manipulator zur Handhabung erfasst werden. Besonders bevorzugt erfolgt das Schließen des Abstands - wie bereits beschrieben, noch während der Zuführung der Stückgüter zum Gruppiermodul oder zum Dreh- und/oder Verteilsystem o.ä.

Als erstes Detektionsmittel wird vorzugsweise ein sogenannter Abstandssensor verwendet. Beispielsweise kann vorteilhaft eine Lichtschranke mit einem quer zur Transportrichtung und in etwa horizontal und/oder parallel zu einer Auflage- und/oder Transportebene der ersten Transporteinrichtung ausgerichteten Strahlengang verwendet werden. Die Lichtschranke ist insbesondere derart der Transporteinrichtung zugeordnet, dass sie die Stückgüter im Berührbereich erfasst. Sind die Stückgüter in gewünschter Weise in geschlossener Formation angeordnet, dann ist der Strahlengang im Berührbereich dauerhaft unterbrochen und es wird kein Korrektursignal ausgelöst. Ist dagegen ein ungewünschter Abstand zwischen direkt aufeinanderfolgenden Stückgütern vorhanden, wird der ausgesendete Lichtstrahl der Lichtschranke durch den Empfänger der Lichtschranke detektiert.

Ein entsprechendes Signal wird an eine Steuerungseinrichtung der Vorrichtung übermittelt und das Schließen des Abstands wird durch Ansteuerung von entsprechenden Förderkomponenten der Vorrichtung angesteuert, beispielsweise durch eine Beschleunigung der Transporteinrichtung o.ä. Hierbei können sowohl sogenannte Einweg-Lichtschranken, bei denen Sender und Empfänger einander gegenüberliegend angeordnet sind, als auch Reflexions- Lichtschranken, bei denen Sender und Empfänger in einem gemeinsamen Gehäuse angeordnet sind oder auch sogenannte Reflexions-Lichttaster, zum Einsatz kommen.

Alternativ können Hell-Dunkel- Kontrastsensoren, Ultraschallsensoren, konfokale Sensorsysteme, mechanische Messtaster aber auch induktive Sensoren oder kapazitive Sensoren verwendet werden. Mechanischen Messtaster können beispielsweise einen Stößel und eine Rückstellfeder aufweisen. Der Messtaster ist derart angeordnet, dass der Stößel im Berührbereich an den transportierten Stückgütern mit einem gewissen Druck anliegt.

Ist im Berührbereich ein Abstand zwischen zwei nacheinander transportierten Stückgütern ausgebildet, dann wird der Druck auf den Stößel aufgehoben und ein entsprechendes Signal erzeugt, dass das Vorhandensein des Abstands anzeigt. Bei Verwendung von kapazitiven oder induktiven Sensoren ist es notwendig, die Stückgüter mit einer metallischen Markierung, beispielsweise einem Metallstreifen auszustatten, der durch die Sensoren erkannt und in dessen Abwesenheit ein entsprechendes Signal erzeugt wird.

Da die Größe der Stückgüter bekannt ist, muss sich die metallische Markierung auch nicht über die gesamte Länge der Stückgüter in Transportrichtung erstrecken, sondern kann punktuell aufgebracht sein. Die kapazitiven oder induktiven Sensoren ermitteln jeweils die Distanz zwischen den punktuellen Markierungen der aufeinanderfolgenden Stückgüter. Durch einen Vergleich zwischen der ermittelten IST-Distanz und einer SOLL- Distanz, die beispielsweise einer Stückgutlänge entspricht, wird angezeigt, ob ein ungewünschter Abstand vorhanden ist oder nicht. Weitere dem Fachmann bekannte geeignete Sensoren können als erste Detektionsmittel im Zusammenhang mit vorliegender Erfindung verwendet werden und sollen im Zusammenhang mit vorliegender Anmeldung umfasst sein.

Vorzugsweise ist vorgesehen, dass das mindestens eine ersten Detektionsmittel seitlich an der mindestens einen Transporteinrichtung oder oberhalb der mindestens einen Transporteinrichtung angeordnet ist. Dabei ist der Erfassungsbereich des ersten Detektionsmittels auf den Berührbereich zwischen den Stückgütern ausgerichtet. Insbesondere bei einer Anordnung des Detektionsmittels seitlich neben der Transporteinrichtung kann es in Abhängigkeit von der Form der Stückgüter notwendig sein, dass der Erfassungsbereich einen Bereich in einer bestimmten Höhe über der durch die Transporteinrichtung gebildeten Auflage- und/oder Transportebene für die Stückgüter abdeckt.

Bei einem Produktwechsel kann es vorkommen, dass der Erfassungsbereich des ersten Detektionsmittels nunmehr einen Bereich abdeckt, in dem aufgrund der Form der neuen Produkte immer ein Abstand ausgebildet ist. Um den Erfassungsbereich des Detektionsmittels insbesondere bei einem Produktwechsel o.ä. entsprechend anpassen zu können, ist gemäß einer Ausführungsform vorgesehen, dass das mindestens eine Detektionsmittel höhenverstellbar ausgebildet und/oder angeordnet ist. Somit kann eine Höhe relativ gegenüber der durch die Transporteinrichtung ausgebildeten Auflage- und/oder Transportebene für die Stückgüter eingestellt werden, um den Erfassungsbereich des Detektionsmittels und somit die Vorrichtung an die jeweils zu bearbeitenden Stückgüter optimal anpassen zu können.

Beispielsweise ist das mindestens eine Detektionsmittel höhenverstellbar an einem vertikalen Rahmenelement angeordnet. Die Einstellung kann dabei je nach Ausführungsform manuell oder elektronisch kontrolliert erfolgen.

Auch eine Anordnung des ersten Detektionsmittels unterhalb der Auflage- und/oder Transportebene der ersten Transporteinrichtung ist bei einer entsprechenden Ausbildung der ersten Transporteinrichtung möglich. Ist die Transporteinrichtung beispielsweise als eine Förderkette ausgebildet und weist eine regelmäßige Anordnung von Durchbrüchen auf, dann ist eine Ermittlung ungewünschter Abstände durch die Durchbrüche hindurch möglich. Sinnvollerweise weist das mindestens eine Detektionsmittel einen entsprechend großen Erkennungsbereich in Transportrichtung auf, der das sichere Erfassen aller ungewünschten Abstände innerhalb der geschlossenen Formation erlaubt. Alternativ kann bei einer Anordnung des ersten Detektionsmittels unterhalb der Auflage- und/oder Transportebene der ersten Transporteinrichtung die Verwendung einer Mehrzahl von gleichartigen oder unterschiedlichen ersten Detektionsmitteln sinnvoll sein.

Eine weitere Ausführungsform kann vorsehen, dass das wenigstens eine erste Detektionsmittel der wenigstens eine Transporteinrichtung beweglich zugeordnet ist. Insbesondere kann das erste Detektionsmittel zumindest temporär in einem Bewegungsbereich parallel zu der ersten Transporteinrichtung bewegt werden. Der Bewegungsbereich des ersten Detektionsmittels definiert den Erkennungsbereich des ersten Detektionsmittels. Aufgrund der Beweglichkeit des ersten Detektionsmittels erhöht sich der Erkennungsbereich entsprechend. Dem ersten beweglichen Detektionsmittel ist vorzugsweise ein eigener, insbesondere von der mindestens einen Transporteinrichtung unabhängiger, Antrieb zugeordnet. Das erste bewegliche Detektionsmittel ist beispielsweise auf einem Schlitten angeordnet, der an einer parallel zur Transportrichtung angeordneten Schiene verfahrbar ist.

Gemäß einer Ausführungsform ist vorgesehen, dass das erste bewegliche Detektionsmittel bei einem Produktionsbeginn an einer Endposition seines Bewegungsbereichs angeordnet ist, die einer Anfangsposition seines Bewegungsbereiches in Transportrichtung nachgeordnet ist. D.h., das erste Detektionsmittel befindet sich zu Produktionsbeginn an einer Position, die nur eine Bewegung des ersten Detektionsmittels entgegen der Transportrichtung für die Stückgüter erlaubt. Während die Stückgüter der geschlossenen Formation durch die erste Transporteinrichtung in Transportrichtung zum Gruppiermodul bewegt werden, wird das erste Detektionsmittel entgegen der Transportrichtung der ersten Transporteinrichtung bewegt, bis das erste Detektionsmittel einen ungewünschten Abstand zwischen Stückgütern der geschlossenen Formation erfasst.

Die vom ersten Detektionsmittel erfassten Daten werden der Steuerungseinrichtung übermittelt, die daraufhin ein Schließen des Abstands vermittels eines der oben beschriebenen Korrekturmechanismen oder einer Kombination mehrerer Korrekturmechanismen oder eines anderen geeigneten Korrekturmechanismus ansteuert. Eine Ausführungsform sieht vor, dass das Detektionsmittel in der Position verbleibt, in der es sich beim Erfassen des Abstands befunden hat und an dieser Position weitere ungewünschte Abstände zwischen nachfolgenden Stückgütern der geschlossenen Formation erfasst.

Eine alternative Ausführungsform sieht vor, dass das Detektionsmittel nach Erfassen des ungewünschten Abstands mit einer Geschwindigkeit, die gegenüber der Transportgeschwindigkeit der Transporteinrichtung zumindest kurzzeitig erhöht ist, in Transportrichtung bewegt wird, so dass das Detektionsmittel in Transportrichtung vor dem bereits erfassten Abstand angeordnet wird. Die Bewegung des Detektionsmittels in Transportrichtung wird angehalten oder reversiert, wenn die Steuerungseinrichtung das Schließen des Abstands signalisiert. Das nunmehr statische Detektionsmittel oder das entgegen der Transportrichtung bewegte Detektionsmittel dient jetzt der Kontrolle, ob das Schließen des Abstands erfolgreich war. Erkennt das Detektionsmittel, dass der Abstand nur teilweise oder nicht geschlossen worden ist, wird ein entsprechendes Signal an die Steuerungseinrichtung übermittelt, woraufhin diese erneut Korrekturmechanismen zum vollständigen Schließen des Abstands ansteuert.

Eine weitere Ausführungsform sieht vor, dass die Bewegungsrichtung des Detektionsmittels nach Erfassen eines Abstands reversiert wird und das Detektionsmittel in Transportgeschwindigkeit mit dem erfassten Abstand mitgeführt wird, bis dieser geschlossen worden ist. Dies dient ebenfalls der Erfolgskontrolle. Im Anschluss an das Schließen des Abstands kann das Detektionsmittel entweder wiederum entgegen der Transportrichtung bewegt werden oder aber stationär in der jeweiligen Position verbleiben, um weitere ungewünschte Abstände innerhalb der Zuführung der Stückgüter in lückenloser Formation erfassen.

Weiterhin kann vorgesehen sein, dass der Horizontalfördereinrichtung des Gruppiermoduls wenigstens ein zweites Detektionsmittel zur Erfassung von Raumkoordinaten und/oder Positionsdaten und/oder Umrissdaten der durch den Manipulator abzugreifenden Stückgüter zugeordnet ist. Die durch das zweite Detektionsmittel erfassten Daten werden als Positionswerte zur Verfügung gestellt und insbesondere verwendet, um den wenigstens einen Manipulator entsprechend zu kalibrieren und/oder anzusteuern, damit dieser die entsprechenden Stückgüter sicher und positionsgenau erfassen kann. Weiterhin können auch die Transporteinrichtung, über die die Stückgüter dem Erfassungsbereich zugeführt werden oder die dem Erfassungsbereich zugeordnete Horizontalfördereinrichtung etc. auf Grundlage der ermittelten Raumkoordinaten und/oder Positions- und/oder Umrissdaten kalibriert und/oder angesteuert werden.

Die ermittelten Positionswerte geben insbesondere die genaue Position der durch den Manipulator zu erfassenden Stückgüter innerhalb des Gruppiermoduls an. Der Manipulator wird beispielsweise durch ein Programm gesteuert, dass einen vordefinierten Bewegungsablauf für den Manipulator enthält, welches auf die lückenlose Zuführung der Stückgüter abgestimmt ist. Auch wenn wie vorbeschrieben ungewünschte Abstände innerhalb der Zuführung der Stückgüter in lückenloser Formation erfasst und vor dem Erfassen der Stückgüter durch den Manipulator beseitigt werden, so kann die IST-Position der durch den Manipulator zu erfassenden Stückgüter innerhalb des Gruppiermoduls von der im Programm des Manipulators gespeicherten SOLL-Position abweichen.

D.h. insbesondere, dass sich die Stückgüter in der IST-Position nicht in geeigneter Aufnahmeposition für den Manipulator befinden. Während kleinere Fehlpositionen gegebenenfalls unerheblich sind, können sich aufsummierende Fehlpositionen dazu führen, dass der Manipulator die Stückgüter nicht mehr korrekt greifen kann und es somit zu Fehlfunktionen innerhalb der Vorrichtung kommt. Um ein fehlerhaftes Erfassen des mindestens einen fehlerhaft innerhalb des Gruppiermoduls einlaufenden Stückguts durch den Manipulator zu verhindern, werden die sensorisch ermittelten Daten beispielsweise verwendet, um den Manipulator während des laufenden Verfahrens immer wieder neu zu kalibrieren und auszurichten und insbesondere die Aufnahmeposition des Manipulators an die IST-Position des mindestens einen zu erfassenden Stückgutes oder der Gruppe von mindestens zwei Stückgütern anzupassen.

Gemäß einer bevorzugten Ausführungsform der vorliegenden Erfindung kann das zweite Detektionsmittel zumindest temporär parallel zu der Horizontalfördereinrichtung des Gruppiermoduls bewegt werden. Insbesondere ist das zweite Detektionsmittel in etwa parallel beweglich zur Transportrichtung der Stückgüter auf der Horizontalfördereinrichtung ausgebildet. Beispielsweise ist das zweite beweglich ausgebildete Detektionsmittel analog zu dem vorbeschriebenen ersten beweglich ausgebildeten Detektionsmittel auf einer Schlittenführung angeordnet.

Wenn im Zusammenhang der Positionserkennung von einem beweglich ausgebildeten zweiten Detektionsmittel in Form einer beweglichen optischen Erfassungseinrichtung die Rede ist, so kann es sich hierbei beispielsweise um eine beweglich ausgebildete und/oder beweglich angeordnete Lichtschranke, einen beweglich ausgebildeten und/oder beweglich angeordneten Laserkantenscanner oder einen anderes geeignetes beweglich ausgebildetes und/oder beweglich angeordnetes Detektionsmittel handeln, das geeignet ist, bestimmte Parameter eines Stückgutes und/oder bestimmte Parameter einer Gruppe von Stückgütern, insbesondere Raumkoordinaten und/oder Positions- und/oder Umrissdaten zu erkennen.

Bei Verwendung einer beweglichen Lichtschranke weist diese vorzugsweise einen quer zur Transportrichtung der Stückgüter und in etwa horizontal und/oder parallel zu der Auflage- und/oder Transportebene der Horizontalfördereinrichtung ausgerichteten Strahlengang auf. Durch eine Unterbrechung des Strahlengangs wird beispielsweise angezeigt, dass nunmehr ein Stückgut oder eine Gruppe von Stückgütern in den Erfassungsbereich des Manipulators oder in das Gruppiermodul einläuft.

Bevorzugt wird die Lichtschrankenanordnung durch eine Reflexionslichtschranke zur Erfassung von Hell-Dunkel-Kontrasten innerhalb eines definierbaren Entfernungsbereichs eines Senders/Empfängers ausgebildet. Dies ist insbesondere für eine zweibahnige Verarbeitung von bewegten Stückgütern vorteilhaft, bei der jeweils eine optische Erfassungseinrichtung beidseitig zum Erfassungsbereich des mindestens einen Manipulators vorgesehen ist.

Jede der optischen Erfassungseinrichtungen ist derart eingestellt, dass sie immer nur Stückgüter der jeweilig zugeordneten Reihe erkennen. Der mindestens eine Manipulator greift nach einem definierten Schema jeweils Stückgüter aus einer der beiden Reihen ab, um diese entsprechend einem zu bildenden Lagenschema anzuordnen und/oder auszurichten.

Sofern anstelle einer Lichtschranke ein sogenannter Kantenscanner verwendet wird, welcher der Steuerungseinrichtung Raumkoordinaten und/oder Positions- und/oder Umrissdaten liefert, sind sogar noch detailliertere Positionsdaten erfassbar, so beispielsweise eine Schrägstellung und/oder andere Fehlpositionierung eines der Stückgüter, was gegebenenfalls bei der Erfassung durch den Manipulator korrigiert werden kann. Beispielsweise wird ein solcher Kantenscanner verwendet, um Raumkoordinaten und/ Positions- und/oder Umrissdaten für das jeweils zuvorderst befindliche und durch den Manipulator zu erfassende Stückgut oder die Stückgutgruppe und/oder einer in Transportrichtung nach vorne oder nach hinten weisender Umrisskante zu gewinnen.

Gemäß einer weiteren Ausführungsform wird als optische Erfassungseinrichtung mindestens eine Kamera mit nachgeschalteter Bildauswertung verwendet, aus deren Daten die Steuer- und/oder Auswerteeinheit Raumkoordinaten und/oder Positions- und/oder Umrisswerte für ein bewegtes Stückgut gewinnt, insbesondere Raumkoordinaten und/ Positions- und/oder Umrisswerte für das jeweils zuvorderst befindliche Stückgut und/oder dessen nach vorne oder nach hinten weisender Umrisskante. Die genannten optischen Erfassungseinrichtungen oder Sensoreinrichtungen sind beispielhaft zu verstehen. Grundsätzlich können jedoch auch andere Sensorvarianten zum Einsatz kommen, so beispielsweise Ultraschallsensoren oder dergleichen. Weitere geeignete Sensoren können vom Fachmann ebenfalls vorteilhaft eingesetzt werden.

Der Manipulator ist weiterhin an eine bereits oben erwähnte Steuerungseinrichtung gekoppelt. Die Steuerungseinrichtung der Vorrichtung steuert beispielsweise allgemein die Bewegung des Manipulators und/oder weiterer Maschinenbauteile der Vorrichtung. Vorzugsweise enthält die Steuer- und/oder Auswerteeinheit abgespeicherte Informationen zu einer aus einer Vielzahl an Stückgütern zu bildenden Gruppierung für eine palettierfähige Lage, wobei die jeweiligen Zielpositionen und/oder Zielausrichtungen der Stückgüter einen Teil der Informationen bilden und den jeweiligen Stückgütern eine jeweilige bestimmte Lage und/oder relative Orientierung in der jeweiligen Gruppierung zuordnen.

Die sensorisch ermittelten Daten werden an die Steuerungseinrichtung übermittelt und der wenigstens eine Manipulator und/oder die Bewegungssteuerung des wenigstens einen Manipulators wird /werden zumindest während der Erfassung wenigstens eines bewegten Stückgutes, beispielsweise während der Erfassung des wenigstens einen zuvorderst angeordneten Stückgutes, und der räumlichen Abtrennung des wenigstens einen Stückgutes von den nachfolgenden Stückgütern auf Grundlage der von der Steuer- und/oder Auswerteeinheit gelieferten Koordinaten- und/oder Positionswerte kalibriert. Beispielsweise erfolgt die Kalibrierung anhand von Koordinaten- und/oder Positionswerten für die jeweils zuvorderst befindlichen Stückgüter und/oder deren nach vorne oder nach hinten weisender Umrisskanten.

Die sensorisch ermittelten Werte werden insbesondere verwendet, um vermittels der Steuerungseinrichtung einen Bewegungsablauf des Manipulators zu berechnen und/oder den Bewegungsablauf gegebenenfalls anzupassen und/oder zu korrigieren. Die berechneten Werde dienen vorzugsweise der selektiven Ansteuerung, Aktivierung und/oder Bewegung der Klemm- oder Greifmittel des Manipulators durch die Steuer- und/oder Auswerteeinheit der Handhabungsvorrichtung.

Gemäß einer weiteren Ausführungsform der Vorrichtung ist vorgesehen, dass diese mindestens zwei Transporteinrichtungen zur Zuführung von Stückgütern in jeweils lückenloser Formation umfasst. In diesem Fall ist jeder Transporteinrichtung jeweils mindestens ein erstes Detektionsmittel zugeordnet.

Es sei an dieser Stelle ausdrücklich erwähnt, dass alle Aspekte und Ausführungsvarianten, die im Zusammenhang mit der erfindungsgemäßen Vorrichtung erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zur erfindungsgemäßen Vorrichtung von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Vorrichtung betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Vorrichtung.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figuren 1 und 2 zeigen jeweils eine schematische Darstellung einer ersten Ausführungsform einer Vorrichtung zum Umgang mit in mindestens einer Reihe nacheinander bewegten Stückgütern von oben.
Fig. 3 zeigt eine schematische Darstellung einer zweiten Ausführungsform einer Vorrichtung zum Umgang mit in mindestens einer Reihe nacheinander bewegten Stückgütern von oben.
Fig. 4 zeigt eine schematische Darstellung einer dritten Ausführungsform einer Vorrichtung zum Umgang mit in mindestens einer Reihe nacheinander bewegten Stückgütern von oben.
Fig. 5 zeigt eine schematische Darstellung einer vierten Ausführungsform einer Vorrichtung zum Umgang mit in mindestens einer Reihe nacheinander bewegten Stückgütern von oben.
Fig. 6 zeigt eine schematische Darstellung einer fünften Ausführungsform einer Vorrichtung zum Umgang mit in mindestens einer Reihe nacheinander bewegten Stückgütern von oben.
Fig. 7 zeigt eine seitliche Darstellung einer sechsten Ausführungsform einer Vorrichtung zum Umgang mit in mindestens einer Reihe nacheinander bewegten Stückgütern.
Fig. 8 zeigt eine Darstellung einer siebten Ausführungsform einer Vorrichtung zum Umgang mit in mindestens einer Reihe nacheinander bewegten Stückgütern von oben.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

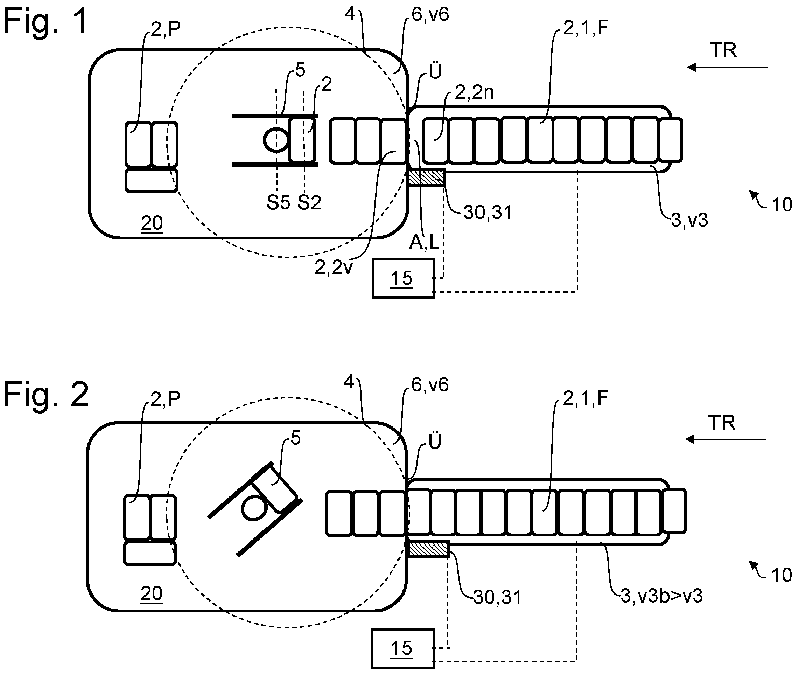

Die Figuren 1 und 2 zeigen jeweils eine schematische Darstellung einer ersten Ausführungsform einer Vorrichtung 10 zum Umgang mit in mindestens einer Reihe 1 nacheinander bewegten Stückgütern 2 von oben. Bei den bewegten Stückgütern 2 kann es sich gemäß einer bevorzugten Ausführungsform um in mindestens einer Reihe 1 hintereinander bewegte Artikel, Packstücke, Behälterzusammenstellungen, Gebinde, Kartons o.ä. handeln.

Beispielsweise kann vorgesehen sein, dass eine Mehrzahl von gleichen oder unterschiedlichen Artikeln durch eine Kartonumverpackung, durch eine Umreifung oder mehrere Umreifungen, durch eine Folienverpackung, durch Klebeverbindungen oder dergleichen zu einem Gebinde oder Mischgebinde zusammengefasst sind. Weiterhin kann eine Mehrzahl von Getränkebehältern, die beispielsweise durch eine Schrumpfverpackung, durch ein Umreifungsband oder mehrere Umreifungsbänder zusammengehalten werden, jeweils ein Stückgut 2 im Sinne der vorliegenden Definition bilden.

Die in mindestens einer Reihe 1 hintereinander bewegten Stückgüter 2 können dabei je nach Anforderung von nachfolgenden Handhabungsvorrichtungen gleich oder unterschiedlich ausgebildet sein.

Die in den Figuren 1 und 2 beispielhaft gezeigte Vorrichtung 10 umfasst eine erste Transporteinrichtung 3, auf der unmittelbar aufeinanderfolgende Stückgüter 2 in einer Reihe 1 in Transportrichtung TR mit einer im Wesentlichen kontinuierlichen Transportgeschwindigkeit v3 in einen Erfassungsbereich 4 mindestens eines beweg-, verschieb- und/oder rotierbaren Manipulators 5 der Vorrichtung 10 transportiert werden.

Die Transporteinrichtung 3 wird beispielsweise jeweils durch ein Förderband oder eine andere geeignete Fördereinrichtung gebildet, auf der die Stückgüter 2 vorzugsweise einreihig transportiert werden, wobei zwischen jeweils direkt aufeinander folgenden Stückgütern 2 in einem gewünschten SOLL-Zustand kein Abstand besteht. Die Stückgüter 2 laufen somit in der Reihe 1 in einer sogenannten lückenlosen geschlossenen Formation F in den Erfassungsbereich 4 des Manipulators 5 ein.

Dem Manipulator 5 und insbesondere dem Erfassungsbereich 4 des Manipulators 5, welcher in Fig. 1 durch einen Kreis markiert ist, ist eine Horizontalfördereinrichtung 6 zugeordnet. Die Stückgüter 2 gelangen von der Transporteinrichtung 3 auf die insbesondere zur ersten Transporteinrichtung 3 fluchtenden Horizontalfördereinrichtung 6. Auf der Horizontalfördereinrichtung 6 wird jeweils mindestens ein Stückgut 2 oder eine Gruppe umfassend mindestens zwei Stückgüter 2 durch den Manipulator 5 innerhalb des Erfassungsbereiches 4 erfasst, von den nachfolgenden Stückgütern 2 der Reihe 1 abgetrennt und in eine Zielposition und/oder Zielausrichtung P verbracht und in dieser Zielposition und/oder Zielausrichtung P auf der Horizontalfördereinrichtung 6 freigegeben.

Die Horizontalfördereinrichtung 6 und der Manipulator 5 mit seinem Erfassungsbereich 4 bilden das sogenannte Gruppiermodul 20 der Vorrichtung 10. Der Manipulator 5 ist insbesondere zum klemmenden und/oder kraft- und/oder formschlüssigen Entgegennehmen von Stückgütern 2 innerhalb des Erfassungsbereichs 4 des Gruppiermoduls 20 ausgebildet. Beispielsweise senkt sich der Manipulator 5 von oben über die zu erfassenden Stückgüter 2 ab und greift diese

Die Darstellung der Fig. 1 zeigt bereits drei in einer Zielposition und/oder Zielausrichtung P auf der Horizontalfördereinrichtung 6 angeordnete Stückgüter 2. Der Manipulator 5 erfasst das zuvorderst angeordnete Stückgut 2 der Reihe 1 und überführt dieses unter Drehung (vgl. Fig. 2) in eine definierte Zielposition und/oder Zielausrichtung (nicht dargestellt). Die jeweilige Zielposition und/oder Zielausrichtung wird insbesondere durch eine vorgegebene zu bildende Lagenanordnung definiert. D.h., der Manipulator 5 bereitet im dargestellten Ausführungsbeispiel die Stückgüter 2 für eine nachfolgende Palettierung durch ein Palettierungsmodul vor. Alternativ und entsprechend den Anforderungen nachfolgender Handhabungsvorrichtungen kann der Manipulator 5 auch als Drehsystem und/oder als Verteilsystem oder dergleichen fungieren.

Die Stückgüter 2 werden auf der ersten Transporteinrichtung 3 in Transportrichtung TR mit einer vorzugsweise konstanten Transportgeschwindigkeit v3 bewegt und insbesondere in einem SOLL-Zustand lückenlos von der ersten Transporteinrichtung 3 an die Horizontalfördereinrichtung 6 des Gruppiermoduls 20 übergeben. Auf der Horizontalfördereinrichtung 6 werden die Stückgüter 2 vorzugsweise in Transportrichtung TR mit einer konstanten Geschwindigkeit v6 weitergeführt, die insbesondere der Transportgeschwindigkeit v3 der Transporteinrichtung 3 entspricht.

Vorzugsweise werden die Stückgüter 2 auf der Horizontalfördereinrichtung 6 durch den Manipulator 5 in einem einzigen, insbesondere unterbrechungsfreien, Manipulationsschritt in die gewünschte Zielposition und/oder Zielausrichtung P überführt, geschoben und/oder gedreht. Hierbei kann vorgesehen sein, dass der Manipulator 5 die erfassten Stückgüter 2 beispielsweise anhebt, zur Zielposition und/oder Zielausrichtung P befördert und auf der Horizontalfördereinrichtung 6 innerhalb des Erfassungsbereiches 4 wieder absetzt.

Alternativ kann vorgesehen sein, dass der Manipulator 5 die Stückgüter 2 auf der Horizontalfördereinrichtung 6 verschiebt, indem er insbesondere eine Geschwindigkeitskomponente und/oder eine Richtungskomponente auf die erfassten Stückgüter 2 aufbringt. Bei den hier beschriebenen Manipulationsschritten ist insbesondere vorgesehen, dass sich der Manipulator 5 zumindest beim Erfassen mindestens eines Stückgutes 2 und bei dessen Freigabe in der Zielposition und/oder Zielausrichtung P mit einer Geschwindigkeit bewegt, die annähernd oder exakt der Transportgeschwindigkeit v3 entspricht, mit der sich die geschlossene Formation F der Stückgüter 2 bewegt.

Die Zielposition und/oder Zielausrichtung P der Stückgüter 2 innerhalb des Gruppiermoduls 20 stellt insbesondere eine Relativposition gegenüber der die Stückgüter 2 zuführenden Formation F dar. Da sich die Transporteinrichtung 3 und somit die Formation F im Wesentlichen mit derselben Transportgeschwindigkeit v3 bewegen wie die Horizontalfördereinrichtung 6, bleibt der relative Abstand zwischen den Stückgütern 2 in der Zielposition und/oder Zielausrichtung P und einem noch nicht vom Manipulator 5 erfassten Stückgut 2 der Formation F im weiteren Ablauf immer gleich, obwohl alle Stückgüter 2 kontinuierlich weiter bewegt werden.

Prozessbedingt kann es vorkommen, dass zwischen direkt nacheinander angeordneten Stückgütern 2 innerhalb der geschlossenen Formation F in Abweichung von dem SOLL-Zustand ein ungewünschter Abstand A besteht. Dieser Abstand A kann beim Erfassen der Stückgüter 2 durch den Manipulator 5 zu Fehlern und/oder Problemen führen, insbesondere ist ein exaktes Greifen und somit auch ein exaktes Positionieren in der gewünschten Zielposition und/oder Zielausrichtung P nicht möglich. Unter einem in Abweichung von dem SOLL-Zustand auftretendem Abstand A zwischen den Stückgütern 2 ist insbesondere eine Lücke L nicht definierter Größe innerhalb des Zulaufs an Stückgütern 2 auf der Transporteinrichtung 3 zu verstehen.

Vorzugsweise sind die Stückgüter 2 auf der Transporteinrichtung 3 zumindest bereichsweise Stoß-an-Stoß angeordnet und werden entsprechend Stoß-an-Stoß in Transportrichtung TR bewegt. Von einem in Abweichung von dem SOLL-Zustand ausgebildeten Abstand A wird im vorliegenden Zusammenhang gesprochen, wenn direkt nacheinander angeordnete Stückgüter 2 nicht zumindest bereichsweise einander berühren, d.h. wenn insbesondere keine Berühr- oder Kontaktfläche zwischen direkt aufeinanderfolgenden Stückgütern 2 ausgebildet ist. Der Abstand A kann dabei nur wenige Millimeter betragen.

Mit der Vorrichtung 10 können jedoch auch größere Abstände A von mehreren Zentimetern zwischen direkt aufeinanderfolgenden Stückgütern 2 erkannt und entsprechend korrigiert werden. Die Korrektur erfolgt dabei insbesondere dahingehend, dass der Abstand A oder die Lücke L zwischen den Stückgütern 2 vorzugsweise noch im Zulauf zum Gruppiermodul 20 geschlossen wird, wodurch der SOLL-Zustand, insbesondere die lückenlose Formation F, wiederhergestellt wird. D.h., das Schließen des Abstands A erfolgt gemäß einer besonders bevorzugten Ausführungsform zu einem Zeitpunkt, zu dem sich die Stückgüter 2, zwischen denen der ungewünschte, vom SOLL-Zustand abweichende Abstand A ausgebildet ist, noch auf der ersten Transporteinrichtung 3 befinden.

Zum Erfassen eines ungewünschten in Abweichung von dem SOLL-Zustand auftretenden Abstandes A zwischen direkt aufeinanderfolgenden Stückgütern 2 ist der Transporteinrichtung 3 wenigstens ein erstes Detektionsmittel 30 zugeordnet. Sobald das erste Detektionsmittel 30 einen in Abweichung von dem SOLL-Zustand auftretenden Abstand A oder eine Lücke L erkennt, wird die Information an eine Steuerungseinrichtung 15 der Vorrichtung 10 übermittelt, die daraufhin die Transporteinrichtung 3 ansteuert. Insbesondere wird die Transportgeschwindigkeit der Transporteinrichtung 3 kurzzeitig erhöht - dies ist in Fig. 2 durch das Bezugszeichen v3b dargestellt.

Gemäß der dargestellten Ausführungsform ist das erste Detektionsmittel 30 unmittelbar vor dem Übergangsbereich Ü zwischen der ersten Transporteinrichtung 3 und der Horizontalfördereinrichtung 6 des Gruppiermoduls 20 angeordnet, so dass das Schließen des Abstands A unmittelbar vor oder beim Übertritt der Stückgüter 2 auf die Horizontalfördereinrichtung 6 erfolgt. Hierbei ist es wichtig, dass das Zeitintervall, in dem die Transporteinrichtung 3 mit erhöhter Geschwindigkeit v3b betrieben wird, so gewählt wird, dass die von der Transporteinrichtung 3 beschleunigten Stückgüter 2 die bereits auf der Horizontalfördereinrichtung 6 angeordneten Stückgüter 2 nicht auf dieser in Transportrichtung TR verschieben.

Vorzugsweise erfolgt die kurzzeitige Beschleunigung der Transporteinrichtung 3 zu einem Zeitpunkt, an dem sich der Abstand A im Übergangsbereich Ü befindet, insbesondere zu einem Zeitpunkt, an dem sich das dem Abstand A vorauseilende Stückgut 2v bereits auf der Horizontalfördereinrichtung 6 befindet, während sich das dem Abstand A nacheilende Stückgut 2n noch auf der ersten Transporteinrichtung 3 befindet (vgl. Figuren 1 und 2).

Bei dem ersten Detektionsmittel 30 handelt es sich vorzugsweise um einen Abstandssensor 31. Gemäß einer ersten Ausführungsform kann der Abstandssensor 31 durch eine Lichtschranke gebildet werden, die einen quer zur Transportrichtung TR und in etwa horizontal und/oder parallel zu einer Auflage- und/oder Transportebene der ersten Transporteinrichtung 3 ausgerichteten Strahlengang aufweist.

Werden die Stückgüter 2 in gewünschter Weise in geschlossener Formation F bewegt, dann ist der Strahlengang dauerhaft unterbrochen und es wird kein Korrektursignal ausgelöst. Ist dagegen ein Abstand A vorhanden, wird der ausgesendete Lichtstrahl durch den Empfänger detektiert. Das Signal wird an die Steuerungseinrichtung 15 übermittelt und die Beschleunigung der Transporteinrichtung 3 wird entsprechend angesteuert.

Hierbei können sowohl sogenannte Einweg-Lichtschranken, bei denen Sender und Empfänger einander gegenüberliegend angeordnet sind, als auch ReflexionsLichtschranken, bei denen Sender und Empfänger in einem gemeinsamen Gehäuse angeordnet sind oder auch sogenannte Reflexions- Lichttaster, zum Einsatz kommen. Weiterhin können Hell-Dunkel- Kontrastsensoren, Ultraschallsensoren, konfokale Sensorsysteme, mechanische Messtaster aber auch induktive Sensoren oder kapazitive Sensoren zum Einsatz kommen.

Mechanischen Messtaster können beispielsweise einen Stößel und eine Rückstellfeder aufweisen. Der Messtaster ist derart angeordnet, dass der Stößel an den transportierten Stückgütern 2 mit einem gewissen Druck anliegt. Wird ein Abstand A zwischen zwei nacheinander transportierten Stückgütern 2 festgestellt, dann wird der Druck auf den Stößel aufgehoben und ein entsprechendes Signal erzeugt, dass das Vorhandensein des Abstands A anzeigt.

Bei Verwendung von kapazitiven oder induktiven Sensoren ist es notwendig, die Stückgüter 2 mit einer metallischen Markierung, beispielsweise einem Metallstreifen auszustatten, der durch die Sensoren erkannt und in dessen Abwesenheit ein entsprechendes Signal erzeugt wird. Da die Größe der Stückgüter 2 bekannt ist, muss sich die metallische Markierung auch nicht über die gesamte Länge der Stückgüter 2 in Transportrichtung TR erstrecken, sondern kann auch nur punktuell aufgebracht sein. Die kapazitiven oder induktiven Sensoren ermitteln dann jeweils die Distanz zwischen den punktuellen Markierungen der aufeinanderfolgenden Stückgüter.

Ein Vergleich zwischen der ermittelten IST-Distanz und einer SOLL- Distanz, die beispielsweise einer Stückgutlänge entspricht, ergibt, ob ein ungewünschter Abstand A vorhanden ist oder nicht.

Weitere dem Fachmann bekannte geeignete Sensoren können als erste Detektionsmittel 30 im Zusammenhang mit vorliegender Erfindung verwendet werden und sollen im Zusammenhang mit vorliegender Anmeldung umfasst sein.

Die zumindest kurzzeitige Beschleunigung der ersten Transporteinrichtung 3 ist dadurch möglich, dass die Transporteinrichtung 3 und die Horizontalfördereinrichtung jeweils einen eigenen Antrieb aufweisen und dementsprechend unabhängig voneinander angesteuert werden können.

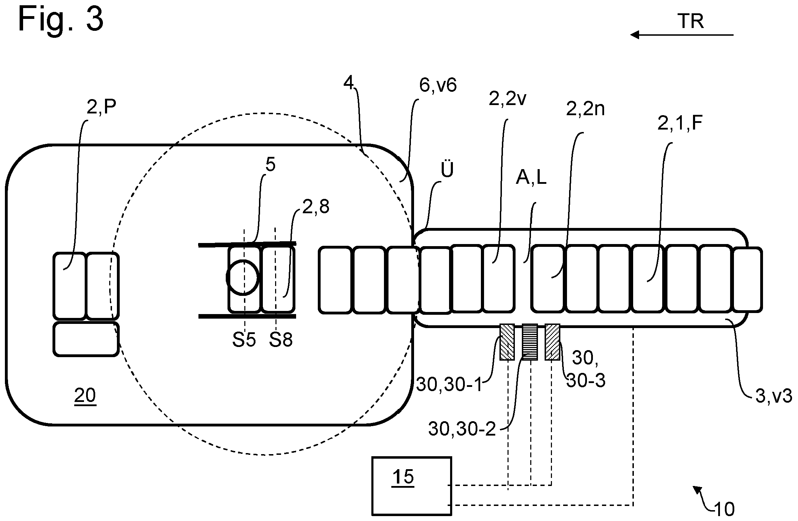

Die Fig. 3 zeigt eine schematische Darstellung einer zweiten Ausführungsform einer Vorrichtung 10 zum Umgang mit in mindestens einer Reihe 1 nacheinander bewegten Stückgütern 2 von oben. Die Ausführungsform entspricht im Wesentlichen der Ausführungsform der Figuren 1 und 2, weshalb auf deren Beschreibung verwiesen und nur die Unterschiede in der Ausbildung und Anordnung des ersten Detektionsmittels 30 beschrieben werden.

Bei der hier dargestellten Ausführungsform ist die Anordnung mehrerer erster Detektionsmittel 30-1, 30-2, 30-3 vorgesehen. Es können gleich oder unterschiedlich ausgebildete erste Detektionsmittel 30-1, 30-2, 30-3 zum Einsatz kommen. Insbesondere können verschiedene der im Zusammenhang mit den Figuren 1 und 2 beschriebenen ersten Detektionsmittel 30 kombiniert werden, insbesondere unterschiedliche Abstandssensoren 31, um die Erkennung von ungewünschten Abständen A zwischen direkt nacheinander transportierten Stückgütern 2 besonders sicher zu gestalten.

Bei dem Ausführungsbeispiel gemäß Fig. 3 ist zudem dargestellt, dass die Anordnung des mindestens einen ersten Detektionsmittels 30 nicht nur benachbart zum Übergangsbereich Ü möglich ist. Das mindestens eine erste Detektionsmittel 30 kann auch an einer anderen Position an der ersten Transporteinrichtung 3 angeordnet werden. In diesem Fall erfolgt die kurzzeitige Beschleunigung der Transporteinrichtung 3 vorzugsweise mit einer gewissen Zeitverzögerung, um ein Verschieben von bereits innerhalb des Gruppiermoduls 20 angeordneten Stückgütern 2 in Transportrichtung TR auszuschließen. Vorzugsweise erfolgt die kurzzeitige Beschleunigung der Transporteinrichtung 3 auch in diesem Fall zu einem Zeitpunkt, an dem sich der Abstand A im Übergangsbereich Ü befindet, d.h., zu einem Zeitpunkt, an dem sich das dem Abstand A vorauseilende Stückgut 2v bereits auf der Horizontalfördereinrichtung 6 befindet, während sich das dem Abstand nacheilende Stückgut 2n noch auf der ersten Transporteinrichtung 3 befindet (nicht dargestellt).

Die Anordnung des mindestens einen ersten Detektionsmittels 30 an der ersten Transporteinrichtung 3 erfolgt insbesondere seitlich oder oberhalb derselben, wobei das erste Detektionsmittel 30 verstellbar ausgebildet sein kann, um die Anordnung, Positionierung und/oder Ausrichtung des ersten Detektionsmittels 30 an die Stückgüter 2, insbesondere an die Größe und Form der Stückgüter 2, anpassen zu können. Beispielsweise kann das erste Detektionsmittel 30 höhenverstellbar ausgebildet sein, so dass eine bevorzugte Höhe über der Auflage- und/oder Transportebene der ersten Transporteinrichtung 3 eingestellt werden kann, um den Erkennungsbereich des ersten Detektionsmittels 30 optimal auf eine Berühr- oder Kontaktfläche zwischen den direkt aufeinanderfolgenden Stückgütern 2 auszurichten. Dies ist insbesondere bei Stückgütern 2 wichtig, die sich nur bereichsweise berühren. Das erste Detektionsmittel 30 wird entsprechend eingestellt, dass es diesen Berührbereich oder Kontaktbereich erfasst.

Bei entsprechender Ausbildung der ersten Transporteinrichtung 3 kann auch eine Anordnung des ersten Detektionsmittels 30 unterhalb der Auflage- und/oder Transportebene der ersten Transporteinrichtung 3 erfolgen. Ist die Transporteinrichtung 3 beispielsweise als eine Förderkette ausgebildet und weist eine regelmäßige Anordnung von Durchbrüchen auf, dann ist eine Ermittlung ungewünschter Abstände A durch die Durchbrüche hindurch möglich. Hierbei kann es sinnvoll sein, mindestens ein erstes Detektionsmittel 30 mit einem entsprechend großen Erkennungsbereich in Transportrichtung TR auszuwählen, um ungewünschte Abstände A sicher zu erfassen. Alternativ kann bei einer Anordnung unterhalb der Auflage- und/oder Transportebene der ersten Transporteinrichtung 3 die Verwendung einer Mehrzahl von ersten Detektionsmitteln 30 sinnvoll sein.

Als erstes Detektionsmittel 30 kann auch eine Kamera mit entsprechender Bildauswertungssoftware zum Einsatz kommen, welche ungewünschte Abstände A oder Lücken L innerhalb der Reihe 1 der geschlossenen Formation F erkennt und die Daten an die Steuerungseinrichtung 15 übermittelt.

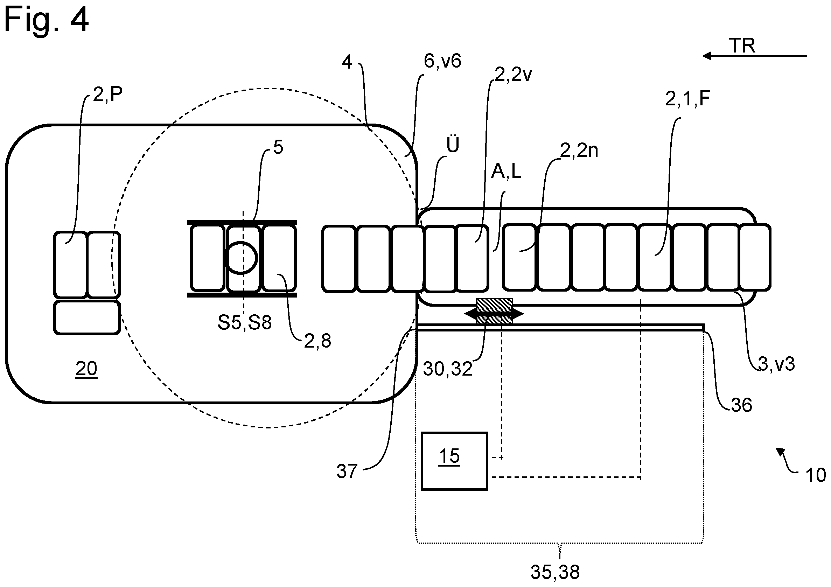

Die Fig. 4 zeigt eine schematische Darstellung einer dritten Ausführungsform einer Vorrichtung 10 zum Umgang mit in mindestens einer Reihe 1 nacheinander bewegten Stückgütern 2 von oben. Auch in diesem Fall wird im Wesentlichen auf die Figurenbeschreibung zu den Figuren 1 und 2 verwiesen. Im dargestellten Beispiel greift der Manipulator 5 eine Gruppe 8 von drei Stückgütern 2 von der einlaufenden Reihe 1 ab und verbringt die Gruppe 8 gemäß dem zu bildenden Lagenschema in die entsprechend vorgegebene Zielposition und/oder Zielausrichtung (nicht dargestellt).

Das erste Detektionsmittel 30 wird in diesem Fall durch einen beweglichen Sensor 32 ausgebildet. Der bewegliche Sensor 32 weist einen Bewegungsbereich 35 auf, der zumindest bereichsweise parallel zur Transporteinrichtung 3 ausgebildet ist. Der bewegliche Sensor 32 kann innerhalb des Bewegungsbereiches 35 in Transportrichtung TR und auch gegen die Transportrichtung TR bewegt werden. Der Bewegungsbereich 35 wird durch einen Anfangspunkt 36 und einen Endpunkt 37 begrenzt und definiert somit den Erkennungsbereich 38 des beweglichen Sensors 32. Der bewegliche Sensor 32 ist beispielsweise auf einem Laufschlitten angeordnet, der über eine Laufschiene, einen Zahnriemenantrieb o.ä. zwischen dem Anfangspunkt 36 und dem Endpunkt 37 innerhalb des Bewegungsbereiches 35 verfahren werden kann. Insbesondere weist der Sensor 32 einen eigenen Antrieb unabhängig vom Antrieb der Transporteinrichtung 3 auf, über den der Sensor 32 vorzugsweise parallel zur Transportrichtung TR der einlaufenden Stückgüter 2 oder entgegen der Transportrichtung TR der einlaufenden Stückgüter 2 bewegt werden kann. Der beweggliche Sensor 32 erkennt einen Abstand A oder eine Lücke L zwischen direkt nacheinander auf der Transporteinrichtung 3 in geschlossener Reihe 1 oder geschlossener Formation F bewegten Stückgütern 2.

Gemäß einer Ausführungsform der Erfindung ist vorgesehen, dass der bewegliche Sensor 32 vor einem Produktionsstart am Endpunkt 37 seines Bewegungsbereiches 35 angeordnet ist. Der Endpunkt 37 des Bewegungsbereiches befindet sich beispielsweise im Übergangsbereich Ü zwischen der Transporteinrichtung 3 und der Horizontalfördereinrichtung 6 des Gruppiermoduls 20. Sobald Stückgüter 2 von der Transporteinrichtung 3 in das Gruppiermodul 20 übertreten, wird eine Bewegung des beweglichen Sensors 32 entgegen der Transportrichtung TR ausgelöst. Wird während der Bewegung des Sensors 32 entgegen der Transportrichtung TR ein Abstand A zwischen direkt aufeinanderfolgenden Stückgütern 2 detektiert, dann wird ein entsprechendes Signal an die Steuerungseinrichtung 15 übermittelt und eine Korrektur durch entsprechende Beschleunigung der Transporteinrichtung 3 zu einem geeigneten Zeitpunkt ausgelöst.

Weiterhin kann vorgesehen sein, dass sich der Bewegungsbereich 35 des beweglichen Sensors 32 sich zumindest geringfügig in das Gruppiermodul 20 hinein erstreckt. Nach Detektion eines Abstands A kann die Steuerungseinrichtung 15 den beweglichen Sensor 32 ebenfalls ansteuern. Beispielsweise wird durch die Steuerungseinrichtung 15 eine Umkehr der Bewegungsrichtung des beweglichen Sensors 32 ausgelöst, so dass dieser nunmehr in Transportrichtung TR bewegt wird. Vorzugsweise wird der bewegliche Sensor 32 mit derselben Transportgeschwindigkeit v3 wie die Transporteinrichtung 3 bewegt, so dass der bewegliche Sensor 32 mit dem Abstand A in Transportrichtung TR mitgeführt wird.

Sobald der Abstand A den Übergangsbereich Ü erreicht hat, wird durch eine Beschleunigung der Transporteinrichtung 3 der Abstand A oder die Lücke L zwischen dem Stückgut 2v, dass dem Abstand vorauseilt, und dem Stückgut 2n, das dem Abstand nachläuft, geschlossen. Da der bewegliche Sensor 32 zeitgleich mit dem Abstand A im Übergangsbereich angeordnet ist, wird nach erfolgtem Schließen des Abstands A ein Signal an die Steuerungseinrichtung 15 übermittelt, dass das Schließen des Abstands A signalisiert. Mit dem beweglichen Sensor 32 kann somit der Erfolg des Schließens des Abstandes A oder der Lücke L überprüft werden. Nachdem der bewegliche Sensor 32 das Schließen des Abstands A detektiert und ein entsprechendes Signal an die Steuerungseinrichtung 15 übermittelt hat, wird durch diese wiederum eine Richtungsumkehr des beweglichen Sensors 32 angesteuert und der bewegliche Sensor 32 wird bis zur Erfassung des nächsten ungewünschten Abstands A erneut entgegen der Transportrichtung TR bewegt.

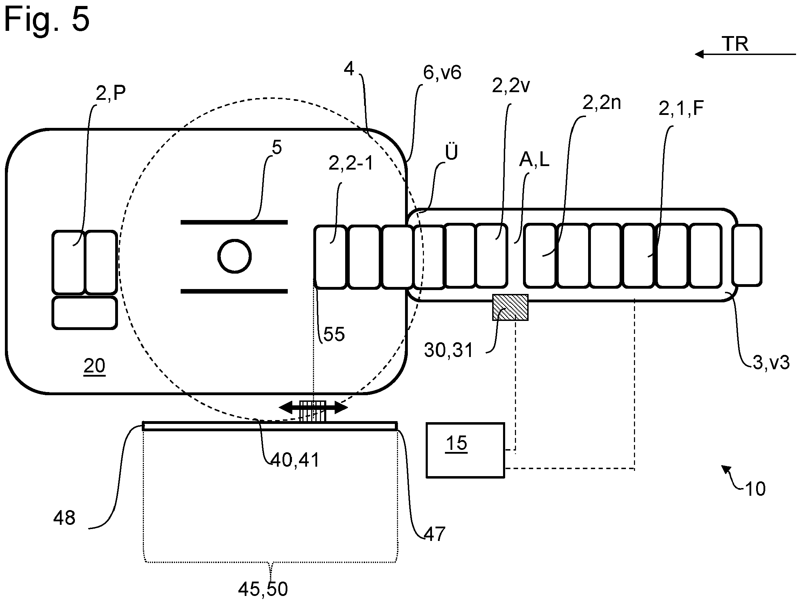

Die Fig. 5 zeigt eine schematische Darstellung einer vierten Ausführungsform einer Vorrichtung 10 zum Umgang mit in mindestens einer Reihe 1 nacheinander bewegten Stückgütern 2 von oben. Hierbei ist der Transporteinrichtung 3 ein erstes Detektionsmittel 30 - wie es beispielsweise im Zusammenhang mit den Figuren 1 bis 4 beschrieben worden ist - zugeordnet. Insbesondere ist der Transporteinrichtung 3 ein feststehender Abstandssensor 31 beabstandet zum Übergangsbereich Ü zugeordnet, so dass die Korrektur zum Schließen des Abstands A insbesondere zeitverzögert zur Detektion des Abstands A erfolgen muss, wobei die notwendige Zeitverzögerung von der Position des Abstands A relativ zum Übergangsbereich Ü und von der Transportgeschwindigkeit v3 der Transporteinrichtung 3 abhängig ist.

Weiterhin ist innerhalb des Gruppiermoduls 20 der Vorrichtung ein zweites Detektionsmittel 40 in Form eines beweglichen Sensors 41 vorgesehen. Der bewegliche Sensor 41 ist insbesondere in einem zweiten Bewegungsbereich 45 parallel zur Transportrichtung TR der Stückgüter 2 auf oder parallel zu der Horizontalfördereinrichtung 6 des Gruppiermoduls 20 beweglich. Der zweite Bewegungsbereich 45 wird durch einen zweiten Anfangspunkt 47 und einen zweiten Endpunkt 48 begrenzt und definiert somit den Erkennungsbereich 50 des beweglichen Sensors 41. Der bewegliche Sensor 41 kann innerhalb des zweiten Bewegungsbereiches 45 in Transportrichtung TR oder entgegen der Transportrichtung TR der Stückgüter 2 zwischen dem zweiten Anfangspunkt 47 und dem zweiten Endpunkt 48 verfahren werden.

Der bewegliche Sensor 41 erkennt mindestens einen bestimmten Parameter des zuvorderst in den Erkennungsbereich 50 einlaufenden Stückgutes 2-1 der Reihe 1. Die Parameter können beispielsweise durch Raumkoordinaten und/oder Positionsdaten und/oder Umrissdaten der durch den Manipulator 5 abzugreifenden Stückgüter 2 gebildet werden. Beispielsweise erkennt der Sensor 41 eine Vorderkante 55 des vordersten Stückgutes 2-1 am Anfangspunkt 47 seines Bewegungsbereiches 45 und somit mit Eintreten des zuvorderst einlaufenden Stückgutes 2-1 in den Erkennungsbereich 50 des beweglichen Sensors 41. Nunmehr wird der bewegliche Sensor 41 parallel zu dem erfassten vordersten Stückgut 2-1 in Transportrichtung TR mitgeführt, bis dieses vorderste Stückgut 2-1 den Endpunkt 48 des Bewegungsbereiches 45 des beweglichen Sensors 41 erreicht hat und den Erkennungsbereich 50 des beweglichen Sensors 41 verlässt.

Alternativ wird der bewegliche Sensor 41 mit dem sensorisch erfassten vordersten Stückgut 2-1 in Transportrichtung TR so lange mitgeführt, bis dieses und gegebenenfalls nachfolgende Stückgüter 2 der Reihe 1 durch den Manipulator 5 des Gruppiermoduls 20 erfasst und in eine Zielposition und/oder Zielausrichtung verbracht wird/werden. Wenn der bewegliche Sensor 41 wieder frei ist, da sich das sensorisch erfasste Stückgut 2-1 nunmehr außerhalb seines Erkennungsbereichs 50 befindet, wird eine Änderung der Bewegungsrichtung des Sensors 41 ausgelöst und dieser nunmehr entgegen der Transportrichtung TR in Richtung des Anfangspunktes 47 seines Bewegungsbereiches 45 zurückgeführt, bis durch den Sensor 41 der entsprechende Parameter des nächsten vordersten Stückgutes 2-1 erfasst wird.

Die jeweilige Position des beweglichen Sensors 41, insbesondere die jeweilige Position des beweglichen Sensors 41 nachdem dieser die Vorderkante 55 eines in Transportrichtung TR vordersten Stückgutes 2-1 innerhalb seines Erkennungsbereiches 50 in Transportrichtung TR erkannt hat und mit dieser innerhalb des Bewegungsbereiches 45 mitgeführt wird, wird an die Steuerungseinrichtung 15 übermittelt. Die Werte werden insbesondere verwendet, um den mindestens einen Manipulator 5 des Gruppiermoduls 20 anzusteuern, damit dieser das jeweils vorderste Stückgut 2-1 und gegebenenfalls nachfolgende Stückgüter 2 der Reihe 1 innerhalb des Gruppiermoduls 20 entsprechend einer zu bildenden Lage oder Teillage oder entsprechend einer gewünschten Verteilungsanordnung oder dergleichem korrekt und exakt erfassen und manipulieren kann.

Vermittels des der Horizontalfördereinrichtung 6 zugeordneten beweglichen Sensors 41 wird insbesondere jeweils die IST- Position des jeweils vordersten Stückgutes 2-1 der Reihe 1 innerhalb des Erfassungsbereiches 4 des Manipulators 5 ermittelt. Die ermittelte IST- Position des vordersten Stückgutes 2-1 wird mit einer definierten SOLL-Position verglichen und gegebenenfalls eine Abweichung zwischen der IST- Position und der SOLL- Position ermittelt.

Beispielsweise werden die Messwerte des beweglichen Sensors 41 an die Steuereinrichtung 15 übermittelt, die den Vergleich zwischen IST- Position und SOLL-Position durchführt und anschließend die Förderkomponenten der Vorrichtung 10, insbesondere die erste Transporteinrichtung 3, die Horizontalfördereinrichtung 6 und/oder den Manipulator 5 entsprechend regelt und/oder ansteuert.

Diese Regelung bewirkt, dass das vorderste Stückgut 2-1 sich beim Erfassen durch den Manipulator 5 in der vorgegebenen, gegebenenfalls durch die Korrektur exakt eingestellten SOLL- Position befindet. Dadurch wird ein korrektes Erfassen des vordersten Stückgutes 2-1 der Reihe und gegebenenfalls nachfolgender Stückgüter 2 durch den Manipulator 5 sichergestellt. Alternativ kann auch das Bewegungsmuster des Manipulators 5 an die erfasste IST-Position des mindestens einen Stückgutes 2-1 angepasst werden.

Nachdem der Manipulator 5 das vorderste Stückgut 2-1 der Reihe 1 und gegebenenfalls nachfolgende Stückgüter 2 erfasst und räumlich abgetrennt hat, wird der bewegliche Sensor 41 zu der theoretischen SOLL- Position des nächsten, nunmehr zuvorderst angeordneten Stückgutes 2-1 bewegt und ermittelt dessen genaue IST-Position auf der Horizontalfördereinrichtung 6, insbesondere die IST-Position relativ zum Manipulator 5. Dabei kann es je Ausgangsposition des beweglichen Sensors 41 gegebenenfalls notwendig sein, dass sich dieser in Transportrichtung TR oder entgegen der Transportrichtung TR bewegt. Auch ist es möglich, dass sich der bewegliche Sensor 41 zuerst in die falsche Richtung bewegt. In diesem Fall können Korrekturmechanismen durch die Steuerungseinrichtung 15 vorhanden sein, die eine schnelle Richtungskorrektur bewirken.

Wenn im Zusammenhang der Positionserkennung oder des Kalibrierverfahrens durch einen der Horizontalfördereinrichtung 6 zugeordnetes zweites Detektionsmittel 40 von einem beweglichen Sensor 41 die Rede ist, so kann es sich hierbei beispielsweise um eine beweglich ausgebildete und/oder beweglich angeordnete Lichtschranke, einen beweglich ausgebildeten und/oder beweglich angeordneten Laserkantenscanner oder einen anderes geeignetes beweglich ausgebildetes und/oder beweglich angeordnetes zweites Detektionsmittel 40 handeln, das geeignet ist, bestimmte Parameter eines Stückgutes 2, insbesondere Raumkoordinaten und/oder Positionsdaten und/oder Umrissdaten zu erkennen.

Bei Verwendung einer beweglichen Lichtschranke weist diese vorzugsweise einen quer zur Transportrichtung der Stückgüter 2 und in etwa horizontal und/oder parallel zu der Auflage- und/oder Transportebene der Horizontalfördereinrichtung 6 ausgerichteten Strahlengang auf. Durch eine Unterbrechung des Strahlengangs wird beispielsweise die Anwesenheit eines Stückgutes 2 im Erfassungsbereich 50 des beweglichen Sensors 41 angezeigt.

Bevorzugt wird die Lichtschrankenanordnung durch eine Reflexionslichtschranke zur Erfassung von Hell-Dunkel-Kontrasten innerhalb eines definierbaren Entfernungsbereichs eines Senders/Empfängers ausgebildet. Sofern anstelle einer Lichtschranke ein sog. Kantenscanner verwendet wird, welcher der Steuer- und/oder Auswerteeinheit Raumkoordinaten und/oder Positionsdaten und/oder Umrissdaten liefert, sind sogar insbesondere zusätzlich noch detailliertere Positionsdaten erfassbar, so beispielsweise eine Schrägstellung und/oder andere Fehlpositionierung eines der Stückgüter 2, was ggf. bei der Erfassung durch den Manipulator 5 korrigiert werden kann. Beispielsweise wird ein solcher Kantenscanner verwendet, um Raumkoordinaten und/ Positionsdaten und/oder Umrissdaten für das jeweils zuvorderst befindliche Stückgut 2, insbesondere einer in Transportrichtung TR nach vorne oder nach hinten weisender Umrisskante 55 zu gewinnen.

Gemäß einer weiteren Ausführungsform wird als beweglicher Sensor 41 mindestens eine Kamera mit nachgeschalteter Bildauswertung verwendet, aus deren Daten die Steuerungseinrichtung 15 Raumkoordinaten und/oder Positionsdaten und/oder Umrisswerte für ein bewegtes Stückgut 2 gewinnt, insbesondere Raumkoordinaten und/oder Positionsdaten und/oder Umrisswerte für das jeweils zuvorderst befindliche Stückgut 2-1 und/oder dessen nach vorne weisender Umrisskante 55. Die genannten Sensoreinrichtungen sind beispielhaft zu verstehen. Grundsätzlich können jedoch auch andere Sensorvarianten zum Einsatz kommen, so beispielsweise Ultraschallsensoren o. dgl. Weitere geeignete Sensoren können vom Fachmann ebenfalls vorteilhaft eingesetzt werden.

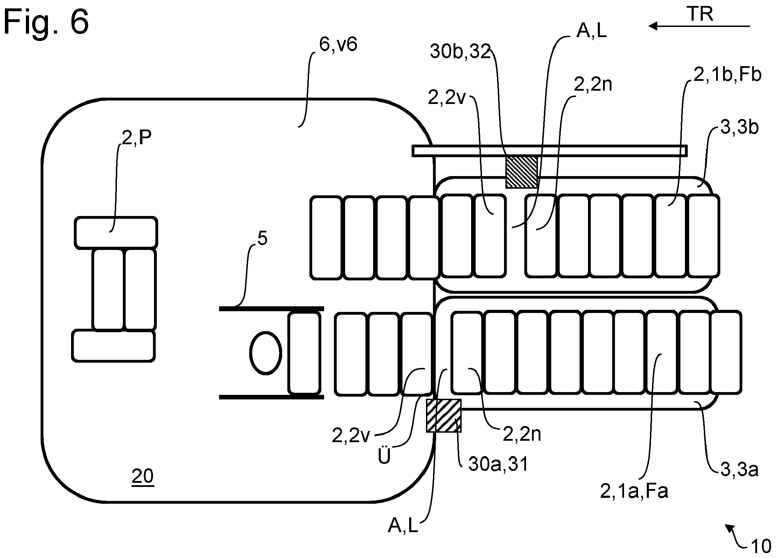

Die Fig. 6 zeigt eine schematische Darstellung einer fünften Ausführungsform einer Vorrichtung 10 zum Umgang mit in mindestens einer Reihe 1 nacheinander bewegten Stückgütern 2 von oben. Insbesondere ist hierbei eine Vorrichtung 10 dargestellt, bei der Stückgüter 2 über zwei parallele Transporteinrichtungen 3a, 3b jeweils in lückenloser Reihe 1a, 1b oder lückenloser Formation Fa, Fb dem Gruppiermodul 20 zugeführt werden. Jeder der beiden Transporteinrichtungen 3a, 3b ist jeweils ein erstes Detektionsmittel 30a, 30b zugeordnet.

Beispielhaft ist der Transporteinrichtung 3a im Übergangsbereich zur Horizontalfördereinrichtung 20 des Gruppiermoduls 20 ein stationärer Abstandsensor 31 zugeordnet, wie er im Zusammenhang mit den Figuren 1 und 2 bereits beschrieben worden ist. Der Transporteinrichtung 3b ist dagegen ein beweglicher Sensor 32 analog zur Beschreibung der Fig. 4 zugeordnet.

Für den Fachmann ist selbstverständlich, dass die vorbeschriebenen Sensoren und geeignete weitere Sensoren in beliebiger Kombination gemäß der Offenbarung der Anmeldung an den Transporteinrichtungen 3a, 3b angeordnet oder diesen zugeordnet werden können. Insbesondere können für die unterschiedlichen Transporteinrichtungen 3a, 3b jeweils gleiche Sensoren oder aber - wie dargestellt - unterschiedliche Sensoren verwendet werden.

Im dargestellten Ausführungsbeispiel greift der Manipulator 5 des Gruppiermoduls 20 gemäß einem vorgegebenen Lagenschema wahlweise Stückgüter 2 von einer der beiden zuführenden Reihen 1a, 1b ab und verbringt diese in eine entsprechende Zielposition und/oder Zielausrichtung P, wobei die jeweils erfassten Stückgüter 2 insbesondere fluchtend in Transportrichtung TR verschoben werden, in Transportrichtung TR verschoben und zusätzlich seitlich versetzt werden und/oder in Transportrichtung TR verschoben und dabei gedreht und gegebenenfalls auch noch seitlich versetzt werden. Zur Ausbildung einer Lage werden hierbei Stückgüter 2 beider Reihen 1a, 1b verwendet. Alternativ kann vorgesehen sein, dass der mindestens eine Manipulator 5 innerhalb des Gruppiermoduls 20 zwei Lagenanordnungen erstellt, wobei die Lagenanordnungen jeweils Stückgüter 2 einer der beiden zuführenden Reihen 1a, 1b umfassen.

In der Figuren 1 bis 6 ist jeweils ein Manipulator 5 dargestellt, der eine Aufnahmekapazität von bis zu drei Stückgütern 2 aufweist. Bei einer vollständigen Beladung des Manipulators 5 mit drei Stückgütern 2 gemäß Fig. 4 spricht man auch von einem symmetrischen Beladen, da eine Symmetrieebene S5 des Manipulators 5 mit einer Symmetrieebene S8 der erfassten Gruppe 8 von drei Stückgütern 2 zusammenfällt. Bei einem unvollständigen Beladen, bei dem der Manipulator 5 weniger Stückgüter 2 erfasst, als er gemäß seiner Aufnahmekapazität erfassen könnte, spricht man dagegen von einem asymmetrischen Beladen.

Dies ist beispielsweise in den Figuren 1 und 2 dargestellt, bei denen der Manipulator 5 nur ein Stückgut 2 erfasst hat, weiterhin in Fig. 3, in der ein Manipulator 5 dargestellt ist, der eine Gruppe 8 von zwei Stückgütern 2 erfasst und von der Reihe 1 abgetrennt hat. Beim asymmetrischen Erfassen fallen die Symmetrieebene S5 des Manipulators 5 und die Symmetrieebene S2 eines erfassten Stückgutes 2 oder die Symmetrieebene S8 einer Gruppe 8 umfassend mindestens zwei Stückgüter 2 auseinander (vergleiche Figuren 1 und 3).

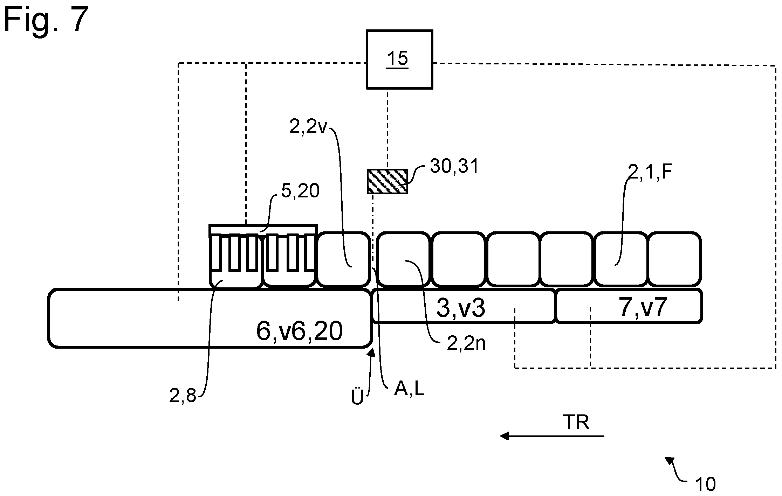

Die Fig. 7 zeigt eine seitliche Darstellung einer sechsten Ausführungsform einer Vorrichtung 10 zum Umgang mit in mindestens einer Reihe 1 nacheinander bewegten Stückgütern 2. Hierbei erfolgt die Zuführung der Stückgüter 2 zur Horizontalfördereinrichtung 6 des Gruppiermoduls 20 über ein Förderband 7, das mit einer Fördergeschwindigkeit v7 betrieben wird sowie eine an das Förderband 7 fluchtend anschließende erste Transporteinrichtung 3, die mit einer Transportgeschwindigkeit v3 betrieben wird. In der Regel werden das Förderband 7 und die erste Transporteinrichtung 3 mit gleichen Geschwindigkeiten betrieben, d.h. die Fördergeschwindigkeit v7 und die Transportgeschwindigkeit v3 sind gleich und es gilt v3 = v7.

In Abhängigkeit der Bereitstellungsituation an Stückgütern 2 für die Fördereinrichtung 7 kann es notwendig sein, diese zeitweise mit einer gegenüber der Transporteinrichtung 3 erhöhten Fördergeschwindigkeit zu betreiben, um beispielsweise Lücken bei der Zuführung der Stückgüter 2 zur Fördereinrichtung 7 auszugleichen. Solche Lücken können entstehen, wenn zeitweise der Nachschub an Stückgütern 2 für die Fördereinrichtung 7 nicht bereitgestellt werden kann. Aus diesem Grund wird die Fördereinrichtung 7 auch als Aufholband bezeichnet.

Wird durch den im Übergangsbereich Ü zum Gruppiermodul 20 angeordneten Abstandssensor 31 ein Abstand A detektiert, dann werden gemäß einer Ausführungsform das Förderband 7 und die Transporteinrichtung 3 kurzzeitig, insbesondere synchron, beschleunigt, damit die dem Abstand A nachfolgenden Stückgüter 2n auf die dem Abstand A vorauseilenden Stückgüter 2v aufschließen, wodurch der Abstand A oder die Lücke L geschlossen und die gewünschte geschlossene, lückenlose Reihe 1 oder geschlossene Formation F an Stückgütern 2 wieder hergestellt wird. Somit wird sichergestellt, dass innerhalb des Gruppiermoduls 20 keine ungewünschten Abstände A zwischen den Stückgütern 2 der zuführenden Reihe 1 ausgebildet sind. Dies ist insbesondere notwendig, wenn der Manipulator 5 eine Gruppe 8 von mindestens zwei Stückgütern 2 erfasst, um diese von der Reihe 1 abzutrennen und die mindestens zwei Stückgüter 2 gemeinsam in einer definierte Zielposition und/oder Zielausrichtung P (vergleiche Figuren 1 bis 6) zu verbringen.

Beispielsweise zeigt das Ausführungsbeispiel gemäß Fig. 7, dass der Manipulator 5 eine Ladekapazität von maximal zwei Stückgütern 2 entsprechender Größe aufweist. Insbesondere kann der dargestellte Manipulator 5 in Abhängigkeit vom zu erstellenden Lagenschema somit jeweils ein Stückgut 2 asymmetrisch oder zwei Stückgüter 2 symmetrisch erfassen und in eine definierte Zielposition und/oder Zielausrichtung (nicht dargestellt) verbringen.

Alternativ kann vorgesehen sein, dass die Horizontalfördereinrichtung 6 kurzzeitig verzögert wird, um im Übergangsbereich Ü einen Abstand A zwischen vorauseilenden Stückgütern 2v, die sich insbesondere bereits auf der Horizontalfördereinrichtung 6 des Gruppiermoduls 20 befinden, und nachlaufenden Stückgütern 2n, die sich insbesondere noch auf der ersten Transporteinrichtung 3 befinden, zu schließen, bevor durch den Manipulator 5 Stückgüter 2 von der Reihe 1 erfasst und gehandhabt werden.

Gemäß einer weiteren Ausführungsform kann auch eine Kombination von zeitweise reduzierter Geschwindigkeit der Horizontalfördereinrichtung 6 und zeitweiser, insbesondere gleichzeitiger, erhöhter Transportgeschwindigkeit der Transporteinrichtung 3 und erhöhter Fördergeschwindigkeit der Fördereinrichtung 7 verwendet werden, um den Abstand A zwischen den dem Abstand A vorauseilenden Stückgütern 2v und den dem Abstand A nachlaufenden Stückgütern 2n zu schließen.

Eine weitere Möglichkeit wäre eine gezielte Ansteuerung des Manipulators 5, so dass dieser nach Erfassen eines Stückgutes 2 oder einer Gruppe 8, dieses/diese kurzzeitig in ihrer absoluten Position innerhalb des Gruppiermoduls 20 festsetzt, so dass dieses/diese nicht in Transportrichtung TR weiterbewegt werden. Dadurch wird auch die Bewegung der dem mindestens einen erfassten Stückgut 2 nachgeordneten Stückgütern 2 der Reihe 1 in Transportrichtung TR verhindert, so dass die dem Abstand A nachlaufenden Stückgüter 2n der Reihe 1 auf die dem Abstand A vorauseilenden Stückgüter 2v aufschließen können.

Bei all diesen beschriebenen Ausführungsformen ist es wichtig, dass die kurzzeitige Beschleunigung oder Verzögerung zeitlich derart begrenzt ist, dass korrekt positionierte Stückgüter 2, insbesondere korrekt innerhalb des Gruppiermoduls 20 angeordnete Stückgüter 2, nicht von den Stückgütern 2 mit veränderter, insbesondere erhöhter, Geschwindigkeit verschoben werden. Dies wird vorzugsweise durch die Steuerungseinrichtung 15 reguliert, damit ein ordentliches und korrektes Erfassen des jeweiligen Stückgutes 2 oder der Gruppe 8 von Stückgütern 2 durch den Manipulator 5 möglich ist. Aus diesem Grund kann eine zusätzliche Erfassung der Position der durch den Manipulator 5 abzugreifenden Stückgüter 2 innerhalb des Gruppiermoduls 20 sinnvoll sein, so wie dies im Zusammenhang mit Fig. 5 beispielhaft beschrieben worden ist.

In allen diesen unterschiedlichen alternativen Ausführungsformen wird der Abstand A zwischen den dem Abstand A nachlaufenden Stückgütern 2n und den dem Abstand A vorauseilenden Stückgut 2v innerhalb einer Reihe 1 geschlossen, bevor das dem Abstand A vorauseilende Stückgut 2v innerhalb des Gruppiermoduls 20 durch den Manipulator 5 erfasst wird. Insbesondere wird der Abstand A geschlossen, bevor der Manipulator 5 eine Gruppe 8 von mindestens zwei Stückgütern 2 erfasst, zu denen das direkt dem Abstand A vorauseilende Stückgut 2v und das direkt dem Abstand A nachlaufende Stückgut 2n gehört. Damit wird sichergestellt, dass der Manipulator 5 beim Erfassen von Gruppen 8 immer jeweils Stoß-an-Stoß angeordnete, d.h. einander zumindest bereichsweise berührende Stückgüter 2 erfasst.

Wird ein besonders großer Abstand A zwischen den Stückgütern 2 innerhalb der geschlossenen Formation F detektiert, so kann es sinnvoll sein, die Bewegung der Horizontalfördereinrichtung 6 kurzzeitig komplett anzuhalten. Vorzugsweise wird in diesem Zusammenhang auch die Bewegung des Manipulators 5 entsprechend angepasst, indem beispielsweise das vordefinierte Bewegungsprogramm des Manipulators 5 kurzzeitig unterbrochen wird.

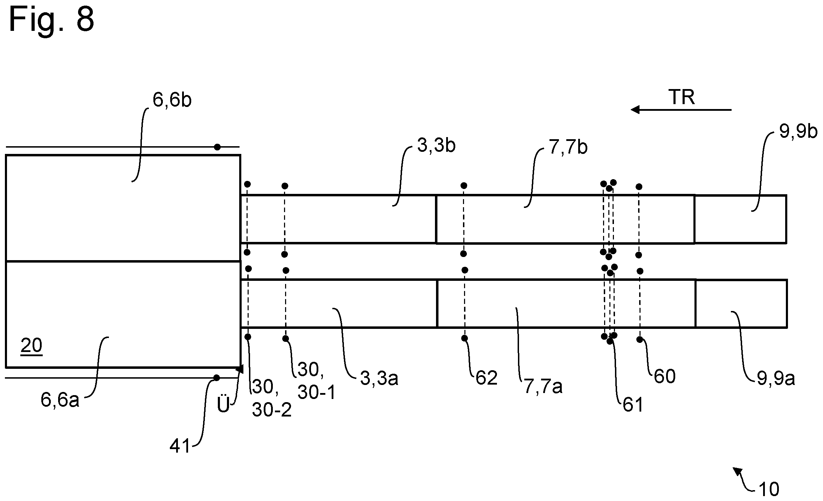

Die Fig. 8 zeigt eine Darstellung einer siebten Ausführungsform einer Vorrichtung 10 zum Umgang mit in mindestens einer Reihe nacheinander bewegten Stückgütern von oben, die vergleichbar mit der Ausführungsform gemäß Fig. 7 ein der ersten Transporteinrichtung 3 vorgeordnetes Förderband 7 umfasst. Bei der Darstellung der siebten Ausführungsform wurde auf die Darstellung der Stückgüter, der Reihen sowie des mindestens einen Manipulators innerhalb des Gruppiermoduls 20 verzichtet.

Das Gruppiermodul 20 kann eine einzige Horizontalfördereinrichtung 6 umfassen, zu der Stückgüter in zwei Reihen über zwei parallele Transporteinrichtungen 3a, 3b zugeführt werden. Alternativ kann das Gruppiermodul 20 auch zwei parallel angeordnete Horizontalfördereinrichtungen 6a, 6b aufweisen, wobei die Stückgüter von der ersten Transporteinrichtung 3a der Horizontalfördereinrichtung 6a zugeführt werden, während die Stückgüter von der ersten Transporteinrichtung 3b der Horizontalfördereinrichtung 6b zugeführt werden.

Innerhalb des Gruppiermoduls 20 kann ein Manipulator vorgesehen sein, der wahlweise Stückgüter von den zuführenden Reihen abgreift, um diese beispielsweise für eine nachfolgende Handhabung neu aufzuteilen und/oder auszurichten oder um diese für eine nachfolgende Palettierung gemäß einem vorgegebenen Lagenschema anzuordnen.

Dabei können innerhalb der Gruppiermoduls 20 ein oder mehrere Lagenanordnungen gebildet werden. Weiterhin kann vorgesehen sein, dass mindestens zwei Manipulatoren innerhalb des Gruppiermoduls 20 vorgesehen sein, wobei entweder jeder Manipulator jeweils Stückgüter von nur einer der beiden Reihen abgreift. Alternativ kann vorgesehen sein, dass jeder der mindestens zwei Manipulatoren wahlweise Stückgüter von beiden zuführenden Reihen abgreift.

Die Stückgüter werden der Vorrichtung 10 über eine externe Transporteinrichtung 9 zugeführt. Insbesondere bedient eine externe Transporteinrichtung 9a die Fördereinrichtung 7a der Vorrichtung 10 und eine externe Transporteinrichtung 9b bedient die Fördereinrichtung 7b der Vorrichtung 10. Den Fördereinrichtungen 7a, 7b sind jeweils mehrere Sensoren zugeordnet, die nur an der Fördereinrichtung 7a mit Bezugszeichen gekennzeichnet sind.

Ein erster Sensor 60 ermittelt, ob Stückgüter im erfassten Bereich vorhanden sind oder aber nicht. Sofern ein Fehlen von Stückgütern auf der Fördereinrichtung 7 ermittelt wird, wird die Zuführung über die externe Transporteinrichtung 9 entsprechend angesteuert, um eine lückenlose Formation an Stückgütern für die nachfolgende Transporteinrichtung 3 zu erzeugen. Der erste Sensor 60 kann beispielsweise durch eine Lichtschranke oder einen anderen geeigneten Sensor gebildet werden.

In Transportrichtung TR nachfolgend ist mindestens ein zweiter Sensor 61 an der Fördereinrichtung 7 angeordnet, der erkennt, ob die Stückgüter in korrekter Weise auf der Fördereinrichtung 7 angeordnet sind. Beispielsweise kann die Länge der Stückgüter ermittelt werden, um die korrekte Ausrichtung der Stückgüter auf der Fördereinrichtung 7 zu überprüfen. Auch kann die Höhe der Stückgüter gemessen werden, um beispielsweise umgefallene Stückgüter zu ermitteln.

Der zweite Sensor 61 kann auch durch eine Kamera mit Bildauswertung gebildet werden, die anhand einer entsprechenden Bilderkennungssoftwäre die korrekte Anordnung und/oder Ausrichtung der Stückgüter auf der Fördereinrichtung 7 ermittelt. Sofern eine fehlerhafte Anordnung und/oder Ausrichtung der Stückgüter auf der Fördereinrichtung 7 erkannt wird, wird das entsprechende Stückgut über eine geeignete Erfassungseinrichtung erfasst und von der Fördereinrichtung 7 entnommen oder aber in eine korrekte Anordnung und/oder Ausrichtung auf der Fördereinrichtung 7 überführt.

Weiterhin ist ein dritter Sensor 62, beispielsweise in Form einer Lichtschranke o.ä. vorgesehen, der das korrekte Eintakten der Stückgüter vor dem Übertritt auf die erste Transporteinrichtung 3, 3a überprüft.

Im dargestellten Ausführungsbeispiel sind der ersten Transporteinrichtung benachbart zum Übergangsbereich Ü in das Gruppiermodul 20 zwei erste Detektionsmittel 30, 30-1, 30-2 zugeordnet, mit denen eventuell vorhandene ungewünschte Abstände zwischen den in lückenloser Formation zugeführten Stückgütern erkannt werden. Insbesondere werden durch erste Detektionsmittel 30-1, an dem die Stückgüter zuerst vorbei transportiert werden, ungewünschte Abstände zwischen den Stückgütern detektiert und daraufhin das Entfernen eines erfassten Abstands angesteuert, wie dies im Zusammenhang mit den Figuren 1 bis 7 ausführlich beschrieben worden ist.

Das in Transportrichtung TR nachgeordnete erste Detektionsmittel 30-2 dient insbesondere der Kontrolle, ob der durch das erste Detektionsmittel 30-1 erfasste Abstand auch vollkommen geschlossen worden ist. Sollte das nachgeordnete erste Detektionsmittel 30-2 ermitteln, dass der Abstand nicht oder nur teilweise geschlossen wurde, kann somit erneut korrigierend eingegriffen werden, um den Abstand zu schließen, bevor die den Abstand begrenzenden Stückgüter durch den Manipulator gegriffen werden.

Weiterhin ist dem Gruppiermodul 20 mindestens ein beweglicher Sensor 41 zugeordnet, mit dem die genaue Position des vordersten einlaufenden Stückgutes vor dem Erfassen dieses Stückgutes durch den Manipulator ermittelt wird. Anhand der ermittelten Position wird beispielsweise das Bewegungsprofil des Manipulators angepasst, um ein korrektes Erfassen und Positionieren der Stückgüter innerhalb des Gruppiermoduls 20 zu gewährleisten.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind.

Wenn auch im Zusammenhang der Figuren generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen der Stückgüter 2 und/oder Teilen der Vorrichtung 10 oder anderer gezeichneter Elemente in irgendeiner Weise in seinem Verständnis beeinträchtigt wäre. Die Figuren ermöglichen es dem Fachmann als Leser somit, anhand der konkreter erläuterten Umsetzungen des erfindungsgemäßen Verfahrens und der konkreter erläuterten Funktionsweise der erfindungsgemäßen Vorrichtung ein besseres Verständnis für den in den Ansprüchen sowie im allgemeinen Teil der Beschreibung allgemeiner und/oder abstrakter formulierten Erfindungsgedanken abzuleiten.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Reihe
- 2: Stückgut
- 2-1: zuvorderst einlaufenden Stückgutes
- 2n: dem Abstand nachlaufendes Stückgut
- 2v: dem Abstand vorauseilendes Stückgut
- 3,3a,3b: erste Transporteinrichtung
- 4: Erfassungsbereich
- 5: Manipulator
- 6,6a,6b: Horizontalfördereinrichtung
- 7,7a,7b: Fördereinrichtung
- 8: Gruppe
- 9: externe Transporteinrichtung
- 10: Vorrichtung
- 15: Steuerungseinrichtung
- 20: Gruppiermodul
- 30: erstes Detektionsmittel
- 31: Abstandssensor
- 32: beweglicher Sensor
- 35: Bewegungsbereich
- 36: Anfangspunkt
- 37: Endpunkt
- 38: Erkennungsbereich
- 40: zweites Detektionsmittel
- 41: beweglicher Sensor
- 45: zweiter Bewegungsbereich
- 47: zweiter Anfangspunkt
- 48: zweiter Endpunkt
- 50: Erkennungsbereich
- 55: Vorderkante
- 60: erster Sensor
- 61: zweiter Sensor
- 62: dritter Sensor
- A: Abstand
- L: Lücke
- P: Zielposition und/oder Zielausrichtung
- S2: Symmetrieebene eines Stückgutes
- S5: Symmetrieebene des Manipulators
- S8: Symmetrieebene einer Gruppe umfassend mindestens zwei Stückgüter
- TR: Transportrichtung
- Ü: Übergangsbereich
- v3: Transportgeschwindigkeit der Transporteinrichtung
- v3b: kurzzeitig erhöhte Transportgeschwindigkeit der Transporteinrichtung
- v6: Geschwindigkeit der Horizontalfördereinrichtung
- v7: Fördergeschwindigkeit der Fördereinrichtung

## Patentansprüche

1. Vorrichtung (10) zum Umgang mit in mindestens einer Reihe (1) nacheinander bewegten Stückgütern (2), wobei in einem SOLL-Zustand keine Abstände zwischen nacheinander angeordneten Stückgütern ausgebildet sind, die Vorrichtung umfassend:
- mindestens einen Manipulator (5) für Stückgüter (2),
- wenigstens eine Transporteinrichtung (3), über welche die bewegten Stückgüter (2) in mindestens einer Reihe (1) zu einem Erfassungsbereich (4) des mindestens einen Manipulators (5) transportierbar sind, sowie
- wenigstens eine dem Erfassungsbereich (4) und/oder einem Bewegungsraum des wenigstens einen Manipulators (5) zugeordnete Horizontalfördereinrichtung (6), über welche die bewegten Stückgüter (2) in dem Erfassungsbereich (4) des mindestens einen Manipulators (5) transportierbar sind,
- wenigstens ein der Transporteinrichtung (3) zugeordnetes erstes Detektionsmittel (30) zur Erfassung eines in Abweichung von dem SOLL-Zustand auftretenden Abstands (A) oder mehrere in Abweichung von dem SOLL-Zustand auftretende Abstände (A) zwischen innerhalb der Reihe (1) nacheinander transportierten Stückgütern (2),
- wobei wenigstens eine Förderkomponente der Vorrichtung (10) bei Erfassung des Abstands (A) oder der Abstände (A) zwischen nacheinander innerhalb der Reihe (1) transportierten Stückgütern (2) steuerbar ist, insbesondere die wenigstens eine Transporteinrichtung (3) und/oder die wenigstens eine Horizontalfördereinrichtung (6) und/oder der wenigstens eine Manipulator (5).

2. Vorrichtung (10) nach Anspruch 1, wobei wenigstens eine Transporteinrichtung (3) und wenigstens eine Horizontalfördereinrichtung (6) unabhängig voneinander steuerbar sind.

3. Vorrichtung (10) nach Anspruch 1 oder 2, wobei die Vorrichtung (10) eine Steuerungseinrichtung (15) zur Regelung und/oder Steuerung des Detektionsmittels und/oder zur Regelung und/oder Steuerung der mindestens einen Transporteinrichtung (3) und/oder zur Regelung und/oder Steuerung der mindestens einen Horizontalfördereinrichtung (6) und/oder zur Regelung und/oder Steuerung des mindestens einen Manipulators (5) umfasst.

4. Vorrichtung (10) nach einem der voranstehenden Ansprüche, wobei das mindestens eine erste Detektionsmittel (30) seitlich an der mindestens einen Transporteinrichtung (3) oder oberhalb der mindestens einen Transporteinrichtung (3) angeordnet ist.

5. Vorrichtung (10) nach einem der voranstehenden Ansprüche, wobei das mindestens eine erste Detektionsmittel (30) höhenverstellbar ausgebildet ist, insbesondere wobei eine Höhe relativ gegenüber einer durch die Transporteinrichtung (3) ausgebildeten Auflage- und/oder Transportebene für die Stückgüter (2) einstellbar ist.

6. Vorrichtung (10) nach einem der voranstehenden Ansprüche, wobei das wenigstens eine erste Detektionsmittel (30) der wenigstens eine Transporteinrichtung (3) beweglich zugeordnet ist.

7. Vorrichtung (10) nach Anspruch 6, bei welcher dem beweglich ausgebildeten ersten Detektionsmittel (30) ein eigener, insbesondere von der mindestens einen Transporteinrichtung (3) unabhängiger, Antrieb zugeordnet ist.

8. Vorrichtung (10) nach einem der voranstehenden Ansprüche, wobei der Horizontalfördereinrichtung (6) wenigstens ein zweites Detektionsmittel (40) zur Erfassung von Raumkoordinaten und/oder Positionsdaten und/oder Umrissdaten der durch den Manipulator (5) abzugreifenden Stückgüter (2) zugeordnet ist,
- wobei der wenigstens eine Manipulator (5) auf Grundlage der Raumkoordinaten und/oder Positions- und/oder Umrissdaten kalibrierbar und/oder steuerbar ist.

9. Vorrichtung (10) nach einem der voranstehenden Ansprüche, wobei die Vorrichtung (10) mindestens zwei Transporteinrichtungen (3) zur Zuführung von Stückgütern (2) umfasst, wobei jeder Transporteinrichtung (3) ein erstes Detektionsmittel (30) zugeordnet ist.

10. Verfahren zum Umgang mit in mindestens einer Reihe (1) nacheinander bewegten Stückgütern (2), die in einem SOLL-Zustand keine Abstände zwischen nacheinander angeordneten Stückgütern aufweisen, wobei die Stückgüter (2) in einer Transportrichtung (TR) zu einem Erfassungsbereich (4) wenigstens eines Manipulators (5) transportiert werden,
- wobei im Erfassungsbereich (4) wenigstens ein transportiertes Stückgut (2) durch den wenigstens einen Manipulator (5) erfasst, von nachfolgenden Stückgütern (2) räumlich abgetrennt und in eine definierte relative Zielposition und/oder Zielausrichtung (P) gegenüber den jeweils nachfolgenden Stückgütern (2) gebracht wird,
- wobei ein in Abweichung von einem Soll-Zustand auftretender Abstand (A) oder mehrere in Abweichung von einem Soll-Zustand auftretende Abstände (A) zwischen innerhalb der Reihe (1) nacheinander transportierten Stückgütern (2) in der Zuführung zu dem Erfassungsbereich (4) durch wenigsten ein erstes Detektionsmittel (30) sensorisch erfasst wird, und
- wobei mindestens eine Förderkomponente zum Schließen des Abstands (A) oder der Abstände zwischen innerhalb der Reihe (1) nacheinander transportierten Stückgütern (2) angesteuert wird.

11. Verfahren nach Anspruch 10, wobei das Schließen des Abstands (A) zwischen einem dem Abstand (A) vorauseilenden Stückgut (2v) und einem dem Abstand (A) nachlaufenden Stückgut (2n) vor dem Erfassen zumindest des dem Abstand (A) vorauseilenden Stückgut (2v) durch den Manipulator (5) erfolgt oder wobei das Schließen des Abstands (A) zwischen einem dem Abstand (A) vorauseilenden Stückgut (2v) und einem dem Abstand (A) nachlaufenden Stückgut (2n) bei dem Erfassen zumindest des dem Abstand (A) vorauseilenden Stückgut (2v) durch den Manipulator (5) erfolgt.

12. Verfahren nach Anspruch 10 oder 11, wobei das Schließen des sensorisch ermittelten Abstands (A) während der Zuführung der Stückgüter (2) zum Erfassungsbereich (4) erfolgt oder wobei das Schließen des sensorisch ermittelten Abstands (A) beim Übergang der Stückgüter (2) in den Erfassungsbereich (4) erfolgt oder wobei das Schließen des sensorisch ermittelten Abstands (A) innerhalb des Erfassungsbereichs (4) erfolgt.

13. Verfahren nach einem der Ansprüche 10 bis 12, wobei eine Transportgeschwindigkeit der Stückgüter (2) während der Zuführung zum Erfassungsbereich (4) kurzzeitig erhöht wird und/oder wobei eine Geschwindigkeit der Stückgüter (2) innerhalb des Erfassungsbereichs kurzzeitig reduziert wird.

14. Verfahren nach einem der Ansprüche 10 bis 13, wobei die sensorische Erfassung eines Abstands (A) vermittels einer optischen Erfassung, einer Ultraschallerfassung, einer induktiven Erfassung und/oder einer kapazitiven Erfassung erfolgt.

15. Verfahren nach einem der Ansprüche 10 bis 14, wobei eine Erfassung von Raumkoordinaten und/oder Positionsdaten und/oder Umrissdaten der durch den Manipulator (5) abzugreifenden Stückgüter (2) innerhalb des Erfassungsbereichs (4) erfolgt,
- wobei die Daten einer Steuer- und/oder Auswerteeinheit (15) als Positionswert zur Verfügung gestellt werden, und
- wobei der mindestens eine Manipulator (5) auf Grundlage der Raumkoordinaten und/oder Positionsdaten und/oder Umrissdaten kalibriert und/oder gesteuert wird.
